# EUROPEAN PATENT SPECIFICATION

(11) **EP 4 663 581 B1**
(45) Date of publication and mention of the grant of the patent: **24.06.2026**
(21) Application number: 25181360.6
(22) Date of filing: 06.06.2025
(51) Int. Cl.: B65G 5/00, E21B 41/00, E21B 43/16

(54) **SYSTEM AND METHOD FOR CARBON MINERALIZATION**
SYSTEM UND VERFAHREN ZUR KOHLENSTOFFMINERALISIERUNG
SYSTÈME ET PROCÉDÉ DE MINÉRALISATION DE CARBONE

(30) Priority: 10.06.2024 WO PCT/EP2024/065963
(43) Date of publication of application: 17.12.2025
(73) Proprietor: Aarhus Universitet, 8000 Aarhus C (DK)
(72) Inventor: Lundbek Egholm, David, 8000 Aarhus C (DK); Sanei, Hamed, 8000 Aarhus C (DK); Tegner, Christian, 8000 Aarhus C (DK); Bodin, Stéphane, 8000 Aarhus C (DK); Rønø Clausen, Ole, 8000 Aarhus C (DK); Andreasen, Rasmus, 8000 Aarhus C (DK); Pedersen, Per Kent, Calgary, T2L 1W1 (CA)
(74) Representative: Høiberg P/S

(56) References cited:
- JEON PIL RIP ET AL: "Dissolution and reaction in a CO2-brine-clay mineral particle system under geological CO2sequestration from subcritical to supercritical conditions", CHEMICAL ENGENEERING JOURNAL, ELSEVIER, AMSTERDAM, NL, vol. 347, 9 April 2018 (2018-04-09), pages 1 - 11, XP085398175, ISSN: 1385-8947, DOI: 10.1016/J.CEJ.2018.04.052
- EROL SELÇUK ET AL: "Fluid-CO2 injection impact in a geothermal reservoir: Evaluation with 3-D reactive transport modeling", GEOTHERMICS, PERGAMON PRESS, GB, vol. 98, 22 October 2021 (2021-10-22), XP086884667, ISSN: 0375-6505, [retrieved on 20211022], DOI: 10.1016/J.GEOTHERMICS.2021.102271
- KELEMEN PETER B. ET AL: "Engineered carbon mineralization in ultramafic rocks for CO2 removal from air: Review and new insights", CHEMICAL GEOLOGY., vol. 550, 6 May 2020 (2020-05-06), NL, pages 119628, XP093231239, ISSN: 0009-2541, DOI: 10.1016/j.chemgeo.2020.119628

## Description

### Technical field

The present invention relates to a system and a method for carbon mineralization as set out in the appended set of claims.

### Background

Technologies for reducing anthropogenic greenhouse gas emissions to the atmosphere are receiving increasing focus in view of the climate challenges. Carbon capture and storage (CCS) is in this context considered a key technology, which may involve capturing the carbon as carbon dioxide (CO₂) from a flue gas, and then transporting and storing the captured CO₂ gas underground.

WO 2020/210137 discloses storage of CO₂ originating from a power plant by injecting the CO₂ into igneous basaltic and ultramafic rocks, which are large volume formations formed from crystallized magma. The CO₂ is dissolved in water to form carbonic acid, which is reactive with the basaltic rocks and results in precipitation of solid carbonate minerals. The CO₂ is accordingly stored as carbon mineralization.

P.R. Jeon et al. (in Chemical Engineering Journal 347 (2018) 1-11) describes dissolution and reaction in a CO₂-brine-clay mineral particle system under geological CO₂ sequestration from subcritical to supercritical conditions.

S. Erol al. (in Geothermics 98 (2022) 102271) describes fluid-CO₂ injection impact in a geothermal reservoir and evaluation with 3-D reactive transport modeling.

P. B. Kelemen et al. (in Chemical Geology 550 (2020) 119628) describes engineered carbon mineralization in ultramafic rocks for CO₂ removal from air.

According to the Intergovernmental Panel on Climate Change (IPCC), mitigating the climate changes may require removal of up to 10 gigaton CO₂ per year from the atmosphere. Thus, there is a need for more efficient carbon storage technologies.

### Summary

The present disclosure provides a system and method for obtaining a more efficient carbon mineralization. Specifically, the present disclosure facilitates that a surprisingly high volume efficiency of the carbon mineralization may be obtained, when the carbon mineralization reaction zone is controlled to a reservoir comprising sedimentary rock and to the surface area of particular first particles of the sedimentary rock.

The first particles comprising volcanic ash particles, are dimensioned and have a specific surface area facilitating an improved and more efficient distribution of the formed carbonate minerals. For example, the dimensions of volcanic ash particles may provide a particular permeable packing of the particles facilitating an efficient distribution of carbonates, specifically compared to clay particles and shales. For example, the reservoir may facilitate a carbon mineralization capacity of up to 350 kg CO₂ per m³ volcanic ash sedimentary layer.

Accordingly a surprisingly small underground formation, such as a formation with an apparent thickness of around 3-4 meters accumulated volcanic ash layers located within e.g. 60 m reservoir (such as the Fur formation), or located within e.g. 5-10 m clay reservoir (such as the Ølst Formation), may be exploited as an efficient reservoir for carbon mineralization.

The underground reservoir is accessed via an injection well and the associated injection point, from where a flow of CO₂ source is provided into the reservoir. The flow rate of the CO₂ source determines the driving force for the CO₂ to mix with any native water present in the reservoir, and the further driving force for the acidified water mixture to contact the surface area of first particles of the sedimentary rocks. Advantageously, the system is configured to provide a predefined flow rate configured such that the extent of the carbon mineralisation reaction zone is limited to a predefined distance or radius from the injection point, such as 100-300 m from the injection point. Accordingly, the system for the reservoir may provide a carbon mineralization capacity for each injection well of between 30,000-440,000 ton CO₂. Thus, a reservoir comprising only ca. 3-4 m accumulated volcanic ash layers, as the Fur and Ølst formations, may surprisingly be used for stably storing up to 2 Gton CO₂ corresponding to the Danish CO₂ emission for 40-50 years.

The invention is defined by the claims. Any subject matter falling outside the scope of the claims is provided for information purposes only.

Advantageously, the system may be further configured to control the flow of the CO₂ source into the reservoir, such that the extent of the carbon mineralisation reaction zone is further controlled and e.g. limited to a predefined distance or radius from the injection point and/or focused to certain formation layers, such a volcanic ash layers.

For example, the distribution of the carbonate minerals formed within the reaction zone, and the extent of the carbon mineralization reaction zone, may be further improved and controlled for a system based on sedimentary rocks comprising alternating layers of a first sedimentary layer and a second sedimentary layer, where the first and second layers have different permeability. The difference in permeability may provide a more efficient distribution of the formed carbon mineralisation within the layer with higher permeability. Accordingly, first sedimentary layers with a surprisingly small thickness of between 0.5-15 cm, and where the accumulated thickness amounts to as low as only 5-7 vol% of a geologic formation, may be exploited as an efficient reservoir for carbon mineralization.

Thus, the sedimentary rock comprises multiple sedimentary layers, as alternating layers of a first sedimentary layer and a second sedimentary layer, where the first sedimentary layer has a first permeability, and the second sedimentary layer has a second permeability, and wherein the first permeability is at least a factor of 10 higher than the second permeability.

The invention relates to a system for carbon mineralization comprising:
- an underground reservoir comprising sedimentary rock, the sedimentary rock comprising multiple first particles, interparticle porosity and native water, wherein said first particles have a specific surface area of between 10-200 m²/g and comprise volcanic ash particles and silicate material comprising one or more divalent cations,
   wherein the sedimentary rock comprises alternating layers of a first sedimentary layer and a second sedimentary layer, wherein the first sedimentary layer has a first permeability, and the second sedimentary layer has a second permeability, and
   wherein the first permeability is at least a factor of 10 higher than the second permeability,
- a CO₂ source,
- one or more injection wells for accessing the underground reservoir, the injection well comprising at least one superficial first opening configured to be connected to the CO₂ source, and at least one subjacent second opening defining an injection point, and
- a pumping system configured to supply a predefined flow rate of the CO₂ source from the injection point forcing CO₂ to mix with the native water, and further forcing the mixture to contact the surface area of the first particles.

In addition or alternatively, the flow of the CO₂ source into the reservoir may be restricted by one or more boundary layers with lower permeability relative to the reservoir, such that the layers function as barriers of the reservoir. Since a CO₂ source may be prone to upwards or downwards migration due to either injection pressure, buoyancy or gravity, the boundary layers may advantageously form an upper and/or lower horizontally barrier. For example, an upper boundary layer may be a thick impermeable layer of plastic clay located superjacently to the reservoir to reduce the upwards flow of CO₂. An example of a lower boundary layer may be a layer comprising a fluid, which is less displaceable than the CO₂ source, such as a horizontal subjacent layer with pressurized water and/or water flowing in a horizontal direction. Thus, examples of lower boundary layers include a layer consisting or comprising low permeable diatomite or clay, or a layer where the formation water is pressurized, by injection of water into the lower boundary layer. The lower layer may thus reduce the downwards flow of CO₂.

In another or further embodiment of the invention, an upper boundary and/or lower boundary of the reservoir is defined by superjacent and/or subjacent layer with lower permeability.

In addition or alternatively, the flow of the CO₂ source into the reservoir may be focused by distribution. For example, the injection well may comprise a casing with multiple openings, such as a perforated filter, configured for distributing the flow of the CO₂ across a multiple of volcanic ash layers of variable thickness. Accordingly, the casing may function as a manifold. The injection well may further comprise a gravel packing surrounding a part of the well or casing, such that the gravel packing forms a high-permeability injection zone for distributing the flow of the CO₂ across a multiple of volcanic ash layers of variable thickness. A gravel packing is also referred to as an emplacement zone or an expanded well, where the gap between the well and the formation is filled with sand and gravel.

In another or further embodiment of the invention, the injection well comprises a casing with multiple openings, and/or the injection well comprises a gravel packing along at least a part of the longitudinal well.

The invention further relates to a method for carbon mineralization comprising the steps of:
- providing an underground reservoir comprising sedimentary rock, the sedimentary rock comprising multiple first particles, interparticle porosity and native water, wherein said first particles have a specific surface area of between 10-200 m²/g and comprise volcanic ash particles and silicate material comprising one or more divalent cations, wherein the sedimentary rock comprises alternating layers of a first sedimentary layer and a second sedimentary layer, wherein the first sedimentary layer has a first permeability, and the second sedimentary layer has a second permeability, and wherein the first permeability is at least a factor of 10 higher than the second permeability,
- providing a CO₂ source,
- providing one or more injection wells for accessing the underground reservoir, the injection well comprising at least one superficial first opening connectable to the CO₂ source, and at least one subjacent second opening defining an injection point,
- injecting a predefined flow rate of the CO₂ source from the injection point, forcing CO₂ to mix with the native water, and further forcing the mixture to contact the surface area of the first particles.

### Description of Drawings

The invention will in the following be described in greater detail with reference to the accompanying drawings.
Figure 1 shows in (A) systems for storing CO₂ gas in underground reservoirs **1** as either liquid CO₂ (left), or as carbon mineralization (right). A close-up of the carbon mineralization storage is shown in (B).
Figure 2 shows embodiments of rock formations comprising particles **2** and different degrees of interparticle porosity **3,** where (A) shows an embodiment with no porosity, (B) shows an embodiment with closed or unconnected porosity, and (C) shows an embodiment with connected or open porosity providing permeability as indicated by thick arrows.
Figure 3 shows an embodiment of a reservoir **1** comprising alternating layers of a first sedimentary layer **1.1** consisting of tephra and/or tuff, and a second sedimentary layer **1.2** consisting of diatomite.
Figure 4 shows results from Example 1, where (A) shows a micrograph of volcanic ash particles, and (B) shows a table summarising the shapes, sizes, and presence of crystallized minerals for volcanic ash particles present in different sedimentary layers.
Figure 5 shows results from Example 1 and the composition of volcanic ash based on XRF measurements, where (A) shows the concentration of divalent cations, and (B) shows a Gaussian kernel density distribution of the sum of divalent cations.
Figure 6 shows results from Example 1, showing the dissolution of divalent cations as a function of time.
Figure 7 shows results from Examples 1-2, where (A) shows the carbon mineralisation reaction rate as a function of time for reservoirs with different efficiency factors (Efac) in Example 1, and (B) shows the carbon mineralisation reaction rate in (A) based on the reaction zone extending in a radial distance of 200 m from the injection point, as described in Example 2.
Figure 8 shows results from Example 2, where the equations for reactive transport shown to the left is used for modelling the progression of the injected fluid and the associated reaction zone.
Figure 9 shows results from Example 2, showing the evolution in the main geochemical elements over time. (A) shows the concentrations of elements on linear scales. (B) shows the concentrations on log-log scales.
Figure 10 shows a cross-sectional view of a system according to the present disclosure, where the injection well comprises a casing with multiple openings and a gravel packing.
Figure 11 shows a cross-sectional view of a system according to the present disclosure, where the upper boundary and lower boundary of the reservoir is defined by a superjacent and subjacent layer with lower permeability.
Figure 12 shows a cross-sectional view of a system according to the present disclosure.
Figure 13 shows a schematic 3D view of a system according to the present disclosure.
Figure 14 shows a schematic 3D view of a system according to the present disclosure comprising two injection wells and two wells for water production.
Figure 15 shows results from Example 1, showing the dissolution of divalent cations in millimole/kg/day.

### Detailed description

The invention is described below with the help of the accompanying figures. It would be appreciated by the people skilled in the art that the same feature or component of the device are referred with the same reference numeral in different figures. A list of the reference numbers can be found at the end of the detailed description section.

### Definitions

Terms and wordings used in the present disclosure are further described below.

### Formation and underground reservoir

A geological formation is a body of rock with consistent physical characteristics that are distinctive from the surrounding rock. For example, a bedrock of granite may be superposed by a first layer comprising mainly sandstone, which again is superposed by a second layer comprising mainly clay or shales. Accordingly, the three distinctive layers constitute three geological formations. By the term "layer" (also referred to as "bed") is meant a structure defined by an upper surface and lower surface, where the distance between the upper and lower surface is the thickness of the layer or bed, and where the thickness may vary across the layer extension. A formation may comprise a single or multiple layers, such as multiple layers with similar physical characteristics or regularly alternating layers. For example, the Fur formation, which is partly exposed above sea level and at the surface in the north western part of Denmark, comprises alternating layers of thinner volcanic ash layers of thickness 0.5-15 cm and thicker diatomite layers, where the accumulated thickness of the ash layers constitute less than 5 m of the up to 60 m thick formation.

An underground or subsurface reservoir may be defined as a subsurface formation having sufficient porosity, specifically interconnected or open porosity, such that is permeable to fluids. Thus a reservoir has sufficient porosity and permeability to store and transmit fluids. Examples of fluids which are typically exploited from reservoirs include oil, gas, and water.

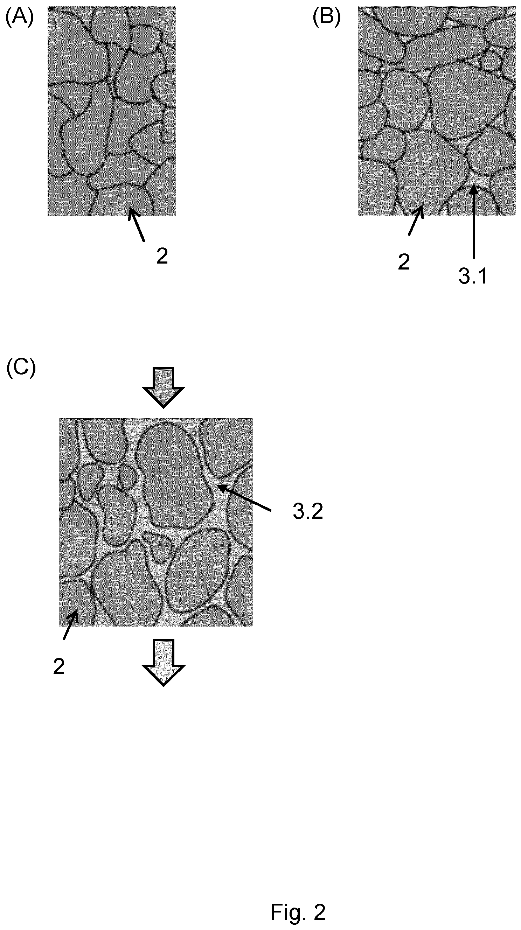

Thus, a reservoir may be formed by particles, and the void spaces between the particles provide the interparticle porosity. Figure 2 shows embodiments of rock formations comprising multiple particles **2** and different degrees of interparticle porosity **3.** Figure 2A shows an embodiment with no interparticle porosity, and Figure 2B shows an embodiment comprising isolated pores **3.1,** also referred to as closed or unconnected porosity. Figure 2C shows a rock formation comprising interconnected pores **3.2,** also referred to as open porosity providing fluid permeability as indicated by thick arrows. Thus, the rock formation in Figure 2C is capable of transmitting fluids and may be referred to as a reservoir. The reservoir may be partly or completely saturated with a fluid, such as air, water, oil, and/or natural gas, meaning that pores are partly or completely occupied by the fluid phase. By the term "saturation degree" is meant the fraction of fluid in the pore voids, and saturation means that all pore voids are filled with fluid.

### Rock

Rocks are naturally occurring aggregates of minerals and mineraloid matter. Igneous rocks and sedimentary rocks are types of rocks that are formed by different processes, and accordingly possess different chemical, physical, and structural properties.

Igneous rocks or magmatic rocks based on melts are formed through the cooling and solidification of magma below the surface (intrusive) or lava (effusive). The solidification typically involves crystallization of molten magma, resulting in the formation of interlocking mineral crystals and/or glass phases without interparticle porosity. Thus, igneous rocks typically comprise no or only closed porosity, as sketched in Figure 2A-B. Igneous rocks are typically large volume formations, and igneous rocks such as basaltic rocks, which are reactive with acidified water are used as reservoirs for carbon mineralization, even though the permeability is low.

Sedimentary rocks are formed from accumulated particles that have been deposited by a transport media, such as air, water, or ice. For example, weathering and erosion of superficial rocks may result in sand and clay minerals that are transported by water and deposited into a sedimentary basin at sea, resulting in layers of sandstone and/or shales. Upon deposition, the sediments may subsequently be compacted due to a pressure from overlying sediments. Sedimentary rocks typically comprise a high fraction of open porosity. However, the permeability of sandstone and clays/shales is different, due to the different particle characteristics. The fine-grained clay results in shales commonly known to be impermeable, whereas sandstones are highly permeable, as sketched in Figure 2C.

Sedimentary rocks may also be formed by deposition from air. For example, fine-grained particles that are ejected during explosive volcanic eruptions may be transported by air and stably deposited into a sedimentary basin, resulting in relatively thin layers of volcanic ash upon underground compaction. The compact volcanic ash layers may also be referred to as tephra or tuff.

In the present disclosure it is surprisingly seen that relatively thin layers of compact volcanic ash may provide a porosity and permeability that facilitates a specifically controlled and efficient carbon mineralization reaction zone, and a related high carbon mineralization capacity, particularly when the volcanic ash layers are sandwiched between layers having a lower permeability.

### Sizes of particles and pores

Particles and pores of a structure are generally not spherically shaped, but will have an irregular shape, and may form an irregular, interconnected network with neighbouring particles and pores. Thus, the size cannot be unambiguously defined by a diameter or radius. Further, the particle sizes and pore sizes of a structure are generally nonuniform and will form a distribution.

When applying the common techniques as known to the skilled person for evaluating particle sizes, the size is often quantified in terms of a representative particle diameter, such as the average particle diameter. For example, the size of non-spherical particle may be quantified as the diameter of an equivalent sphere or cylinder, such as the sphere/cylinder having the same volume or surface area as the non-spherical particle. Alternatively, the particle size may be measured indirectly as the absolute surface area (in m²) or the specific surface area (in m²/g material). Despite this is not a proper quantification from a geometrical point of view, it is applied to provide a quantitative description of the characteristic size.

The term "particle size distribution" refers to the range of sizes that particles in a material or structure have. Particle size distribution is typically expressed in terms of the range of particle diameters present within the material. It can be described using various metrics, such as the mean particle size, median particle size, and the distribution's width. A narrow particle size distribution indicates that the majority of particles are close in size, while a broader distribution indicates a wider range of particle sizes.

Particle size and particle size distribution can be determined in multiple ways as it will be known to someone of skill in the art. For example: Dynamic light scattering (DLS), The absolute surface area and specific surface area of a material is typically measured by gas adsorption, such as nitrogen BET.

Similarly, when applying the common techniques as known to the skilled person for evaluating pore sizes, the pore size is often quantified in terms of a representative pore diameter or pore cylinder diameter, such as the average pore/cylinder diameter. For example, the size of non-spherical pore may be quantified as the diameter of an equivalent sphere or cylinder, such as the sphere/cylinder having the same volume or surface area as the non-spherical pore. Alternatively, the pore size may be measured indirectly by the gas pressure required to displace a liquid within a pore, as measured by capillary flow porosimetry and Young-Laplace formula. Despite this is not a proper quantification from a geometrical point of view, it is applied to provide a quantitative description of the characteristic sizes.

The term "pore size distribution" refers to the range of sizes that pores or openings within a material have. The pore size distribution is typically expressed in terms of the range of pore diameters present within the material. It can be described using various metrics, such as the mean pore size, median pore size, and the distribution's width. A narrow pore size distribution indicates that the majority of pores are close in size, while a broader distribution indicates a wider range of pore sizes. A unimodal pore size distribution indicates a material having one peak in the distribution, whereas a multimodal distribution has two or more peaks, e.g. a bimodal pore size distribution has two peaks, and a trimodal pore size distribution has three peaks.
laser diffraction, sieve analysis, electron microscopy or imaging techniques.

Pore size and pore size distribution can be determined in multiple ways as it will be known to someone of skill in the art. For example by: capillary flow porometry, liquid intrusion porosimetry, gas adsorption, such as BET among others. The pore size and pore size distribution of the present disclosure may be determined by BET.

### Porosity

By the term "porosity" is meant the total void fraction in a material. Thus, the porosity of a rock formation includes both closed porosity, i.e. pores not accessible from a surface of the material, and open porosity which is interconnected, percolating and accessible from a surface of the material. Accordingly, the open porosity may be considered as a 3-dimensional network of interconnected and percolating pores, defined by a web or framework of interconnected particles. Since only the open porosity contributes to the permeability and fluid flow, the open porosity may also be referred to as the effective porosity.

The open porosity of a material may be determined in multiple ways as it will be known to someone of skill in the art. For example, by capillary porosimetry, capillary flow porometry, and/or mercury porosimetry, and preferably by capillary flow porometry due to the simple and environmental friendly technique. The open porosity of the present disclosure may be determined by capillary flow porometry.

### Permeability

The ability of a material or a reservoir to transmit fluids may be indicated as the permeability, and the transmitted fluid may be referred to as the permeate or flux. A sandstone reservoir is typically described as permeable due to a high fraction of large, well-connected pores, and consequently transmit fluids readily with a high permeability. In contrast, a rock formation formed of shales may be impermeable due to a low fraction of pores, and smaller and less interconnected pores, and consequently have no or low permeability, such as 10⁻¹⁶ to 10⁻¹⁸ m².

Absolute permeability is the measurement of the permeability conducted when a single fluid is present in the open pores. Effective permeability is the ability to preferentially flow or transmit a particular fluid through a material, when other miscible and/or immiscible fluids are present in the open pores. For example, the presence of native water in the pores of a reservoir may affect the effective permeability of a CO₂ source, being either gaseous CO₂ or a mixture of CO₂ dissolved in water.

The permeability of a material may be determined in multiple ways as it will be known to someone of skill in the art. For example by capillary porosimetry or capillary flow porometry. The permeability of the present disclosure may be determined by capillary flow porometry.

### Carbon mineralization

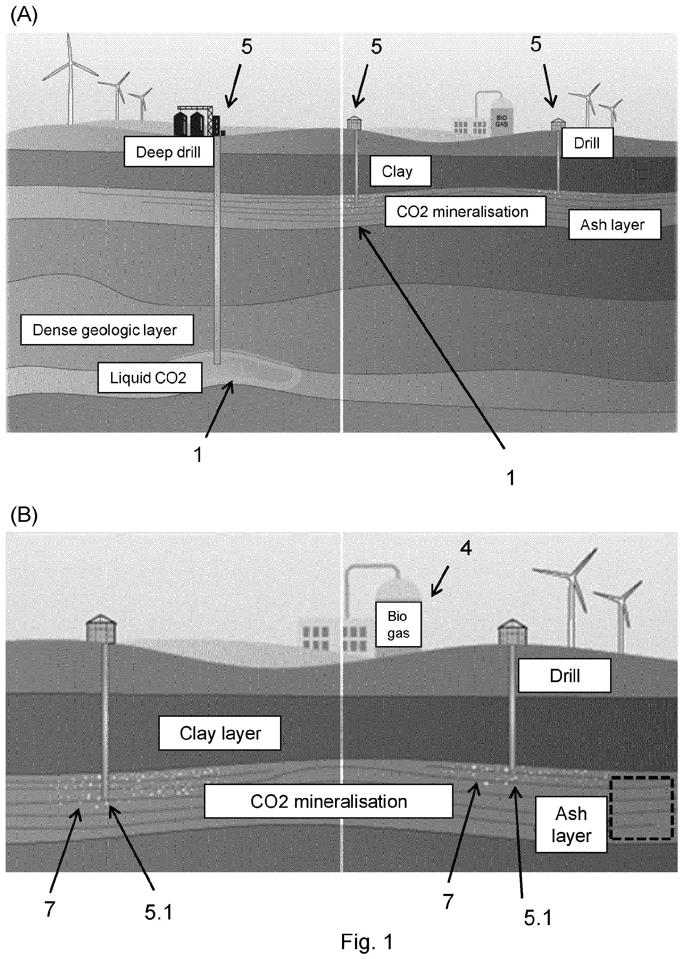

Carbon capture and storage typically involves injection of gaseous carbon dioxide (CO₂) into the underground for storage. For reliable storage, the CO₂ may for example be compressed to a liquid (supercritical) state, and the liquid CO₂ may then be confined in a reservoir with high stability for in principle thousands of years. To ensure that the CO₂ remains in the stable liquid state, a liquid CO₂ reservoir **1** is conventionally located at least ca. 850 vertical meters below ground surface, where the reservoir is accessed via deep drilling and deep injection wells **5,** as illustrated in Figure 1A (to the left).

Alternatively, the CO₂ may be stored as carbon mineralization, as illustrated in Figure 1A (to the right). By the term "carbon mineralization" is meant storage, where the gaseous CO₂ is converted into solid carbonate minerals, thereby forming a solid mineralized storage. Since carbonates are stable as solid phase, the reservoir 1 may be more accessible located, e.g. at depths lower than 850 m, and thus accessed and operated from shallow injection wells **5,** as sketched in Figure 1A (to the right).

The conversion of CO₂ to carbonate minerals may be obtained by initially dissolving the CO₂ into water to form carbonic acid, as sketched in Equations (1A-1C) below, such that acidified water is obtained.

(1A) CO₂ (g) + H₂O (I) ↔ H₂CO₃ (aq)

(1B) H₂CO₃ (aq) ↔ HCO₃⁻ (aq) + H⁺ (aq)

(1C) HCO₃⁻ (aq) ↔ CO₃²⁻ (aq) + H⁺ (aq)

When the acidified water is brought into contact with the rock formation of the reservoir, the silicate minerals present in the rock formation will dissolve and release metal ions, due to the solubility properties of silicates. The released divalent metal ions of e.g. calcium (Ca), magnesium (Mg), and iron (Fe) may then precipitate as solid carbonate minerals, as sketched in Equation (2).

(2) (Ca,Mg,Fe,Mn,Ba,Sr)²⁺ (aq) + CO₃²⁻ (aq) → (Ca,Mg,Fe,Mn,Ba,Sr)CO₃ (s)

The CO₂ may be dissolved in water at the surface prior to being introduced into the injection well. For example, a water source may be mixed and saturated with a gaseous CO₂ source immediately before injection into the reservoir, and optionally the water source may be provided from a nearby tank or from an adjacent bore hole, such as a water bore drilling. In addition, or alternatively, the CO₂ may be dissolved in water present in the porosity of the reservoir, also referred to as native water, pore water, or groundwater.

It follows that the extent and distribution of the reaction zone **7** where carbonate minerals will precipitate, may depend on several parameters including the injection direction and rate, the composition of the injection fluid, and the chemistry, size and geometry of the contact interface between the injected fluid and the rock formation of the reservoir.

For example, the injection well accessing the underground reservoir **1** may comprise a superficial first opening connectable to the CO₂ source **4,** e.g. connected to a CO₂ tank containing essentially pure CO₂ gas from a biogas plant or a CO₂ tank containing a saturated mixture of CO₂ and water. The opposite end of the injection well is located subjacent as access port to the underground reservoir, and comprises one or more second openings defining the injection point **5.1** into the reservoir, as sketched in Figure 1B. The second opening may have any size and geometry, and e.g. be shaped as a nozzle or one or more apertures of the injection well. For example, the second opening may be the end opening of the injection well conduit, as sketched in Figure 1B, or comprise a multiple of apertures located radially to the injection well conduit. Generally, the more uniform the injection from the injection point into the reservoir, the more uniform the extent of the reaction zone.

The flow rate of the CO₂ from the injection point **5.1** may be configured to force the CO₂ source to mix with any native water present in the reservoir, and further force the acidified water mixture to contact the surface area of rock formation of the reservoir, whereby carbonate minerals are formed at the contact interface. Thus, the extent of the contact interface defines the reaction zone **7,** as shown in Figure 1B.

As mentioned above, it follows that the extent and distribution of the reaction zone **7** where carbonate minerals will precipitate, may depend on several parameters including the injection direction and rate, the composition of the injection fluid, and the chemistry, size and geometry of the contact interface between the injected fluid and the rock formation of the reservoir. Specifically, the size and geometry of the contact interface, which is determined by the reservoir porosity and permeability, may affect the carbonate precipitation rate and precipitation distribution, and accordingly the capacity. Generally, the higher the porosity, permeability and contact interface, the larger the reaction zone. Further, the more chemical reactive contact interface, the higher the precipitation rate.

It was surprisingly found that a surprisingly high volume efficiency of the carbon mineralization may be obtained, when the carbon mineralization reaction zone is a reservoir comprising sedimentary rock, and the reaction occurs at the surface area of particular first particles of the sedimentary rock. The first particles, which for example may be volcanic ash particles, are dimensioned and have a specific surface area facilitating an improved and more efficient distribution of the formed carbonate minerals. For example, the reservoir may facilitate a carbon mineralization capacity of 350 kg CO₂ per m³ ash layer, as further described in Examples 1-2. By the term "carbon mineralization capacity" is meant the amount of CO₂ which may be stored within a reservoir as carbonate minerals, optionally normalized to a volume.

The flow rate of the CO₂ source from the injection point **5.1,** the CO₂ source being either gaseous CO₂ or a water saturated CO₂ mixture, supplies the driving force for the CO₂ to mix with any native water present in the reservoir, and the further driving force for the acidified water mixture to contact the surface area of rock formation of the reservoir. Thus, as mentioned above, it follows that the extent and distribution of the reaction zone **7** where carbonate minerals will precipitate, may depend on the injection direction and rate. Particularly, it was surprisingly found that the extent and distribution of the carbonate minerals formed within the reaction zone, may be improved and controlled for a system based on sedimentary rocks comprising alternating layers of a first sedimentary layer and a second sedimentary layer, where the first and second layers have different permeability. The difference in permeability may provide a more efficient distribution of the formed carbon mineralisation within the layer with higher permeability. Accordingly, first sedimentary layers with a surprisingly small thickness of between 0.5-15 cm, and where the accumulated thickness amounts to as low as only 5-7 vol% of a geologic formation, may be exploited as an efficient reservoir for carbon mineralization.

### Reservoir comprising sedimentary rock

It is found that sedimentary rock comprising even a low fraction of sedimented particular first particles dimensioned with a specific surface area, such as volcanic ash, may be surprisingly efficient for carbon mineralization, as the structure may provide porosity and permeability facilitating more controlled carbonate precipitation rate and distribution. Thus, advantageously, the reservoir comprises or consists of sedimentary rock, and does not comprise intrusive or effusive igneous rock, and may further advantageously comprises a high fraction of the first particles, such as a high fraction of volcanic ash.

In an embodiment of the disclosure, the reservoir does not comprise intrusive or effusive igneous rock. In a further embodiment, the first particles constitute between 1-100 vol% of the sedimentary rock, more preferably between 3-99 vol%, and most preferably between 5-95 vol%, such as 10, 25, 30, 50, or 80 vol%.

The first particles of the sedimentary rock may form particularly porous and permeable structures, where the size and geometry of the contact interface between particles and open porosity facilitates improved carbonate precipitation rate and precipitation distribution, and accordingly improved carbon mineralization capacity. This may specifically be obtained for first particles having a specific surface area of about 86 m²/g, and/or an average particle size of between 5-300 µm as measured by microscopy, such as first particles comprising volcanic ash particles.

In an embodiment of the disclosure, the first particles have a specific surface area of between 10-150 m²/g, more preferably between 25-125 m²/g, and most preferably between 50-100 m²/g, such as 80, 86, or 90 m²/g. In a further embodiment of the disclosure, the first particles have an average particle size of between 1-500 µm, more preferably between 3-400 µm, and most preferably between 5-300 µm, such as between 10-255 µm, 20-210 µm, 40-200 µm, or 85-170 µm. In a further embodiment, the first particles comprise volcanic ash particles.

The carbonate precipitation rate and precipitation density may further depend on the chemistry of the reactive silicates. The more reactive the silicate surface, the higher the carbonate precipitation rate and potentially the precipitation density. For example, a reservoir comprising sandstone silicates and limestone silicates may be non-reactive towards CO₂ or acidified water. Accordingly, the capacity for carbon mineralization is essentially non-existent. On the other hand, silicate materials comprising divalent cations may be reactive. Hence, advantageously, the first particles comprise Ca, Mg, and/or Fe rich silicate materials or silicate phases, which are soluble and reactive with acidified water. The silicate material advantageously comprises amorphous glass phase, and optionally minor amounts of silicate minerals, such as feldspars. Examples of silicate minerals that are rich in calcium, magnesium and iron include olivine, pyroxene, amphibole, and biotite.

In an embodiment of the disclosure, the silicate minerals comprise one or more divalent cations selected from the group of: calcium (Ca), magnesium (Mg), iron (Fe), manganese (Mn), barium (Ba), strontium (Sr), and any combination thereof. In a further embodiment, the silicate materials comprise a concentration of divalent cations of between 5-30 wt%, more preferably between 10-25 wt%, and most preferably between 15-20 wt%, such as 17 or 19 wt%. In a further embodiment, the silicate materials comprise between 5-10 wt% Ca, more preferably between 6-9 wt%, such as 7 or 8 wt% Ca. In a further embodiment, the silicate materials comprise an amorphous glass phase and/or a silicate minerals, such as feldspars, optionally plagioclase.

The extent of the reaction zone and the carbonate precipitation rate and precipitation density may further depend on the amount of pore water or native water present within the reservoir, since it may affect the degree of mixing and the uniformity of the formed mixture. For example, a more uniform mixture may result in a higher amount of acidified water that is formed, and thus a larger reaction zone and higher surface contact degree. Thus, advantageously, the reservoir is essentially saturated with native water that is essentially stagnant or has a flow rate that facilitates easy mixing with CO₂ gas, such as a flow rate below the injected flow rate.

In an embodiment of the disclosure, the interparticle porosity is partially saturated or essentially saturated with native water. In a further embodiment, the native water is stagnant or has a flow rate below the injected flow rate of the CO₂ source.

The dimensions and specific surface area of the first particles, which may be volcanic ash particles, facilitates a controlled carbon mineralization at the surface area of the first particles, which may provide improved and more efficient distribution of the formed carbonate minerals. Accordingly, a surprisingly high volume efficiency of the carbon mineralization may be obtained, such as 350 kg CO₂ per m³ volcanic ash sedimentary layer.

In an embodiment of the disclosure, the reservoir is configured to a carbon mineralization capacity of between 250-450 kg CO₂/m³ volcanic ash, and most preferably between 300-400 kg CO₂/m³ volcanic ash, such as 350 kg CO₂ per m³ volcanic ash.

### Sedimentary layers

A sedimentary rock is formed by the accumulated deposition of particles. For example, the particles may have been deposited in a sediment basin to form a layer within the basin with essentially uniform thickness, particularly at the central part of the basin, and optionally gradually thinner around the edges. An example of a sediment layer with approximately uniform thickness is shown in Figure 1A as the reservoir layer 1. Accordingly, the sediment layer has an extension defined by the border of the basin and the surrounding encapsulating formation.

A sediment may comprise multiple layers, also referred to as beds or strata, where each layer has a different composition and microstructure reflecting the natural processes occurring over time, as indicated in Figure 1B for the reservoir layer. For example, a layer of volcanic ash may be deposited as a marine sediment in a basin due to volcanic activity causing emission of volcanic ashes into the atmosphere, which subsequently sediments in the basin, where they may remain undisturbed. Marine sediment layers may also be formed from the inorganic remains of marine microorganisms, such as silicate shells from diatomite algae, and clay minerals originating from the weathering and erosion of the surrounding rocks, which are transported into the basin. The layers may comprise different mixture ratios of silicate shells and clay minerals, depending on the concentration of diatomite algae and the degree of erosion, which may change over time.

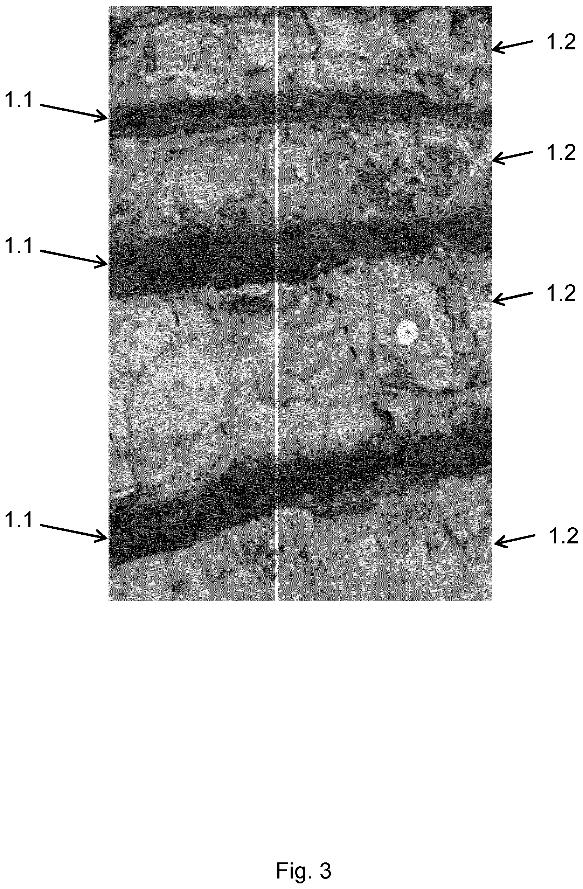

Figure 3 shows a close up of the reservoir 1 indicated with stippled lines in Figure 1B, where the reservoir comprises alternating layers of a first sedimentary layer **1.1** comprising mainly sedimented volcanic ash, also referred to as tephra and/or tuff, and a second sedimentary layer **1.2** comprising a mixture of diatomite algae and clay, also referred to as diatomite. The particles of the first sedimentary layer, i.e. the volcanic ash, are also referred to as the first particles **2.1,** and the particles of the second sedimentary layer, i.e. the diatomite, are also referred to as the second particles **2.2.**

The extent and distribution of the reaction zone where carbonate minerals will precipitate depend on several parameters including the injection direction and rate. The system may thus advantageously be configured to control the flow of the CO₂ source into the reservoir, such that the extent of the carbon mineralization reaction zone is further controlled and e.g. limited to a predefined distance or radius from the injection point and/or focused to certain formation layers, such a volcanic ash layers.

For example, the flow of the CO₂ source into the reservoir may be restricted by one or more boundary layers with lower permeability relative to the reservoir, such that the layers function as barriers of the reservoir. Since a CO₂ source may be prone to upwards or downwards migration due to either injection pressure, buoyancy or gravity, the boundary layers may advantageously form an upper and/or lower horizontally barrier.

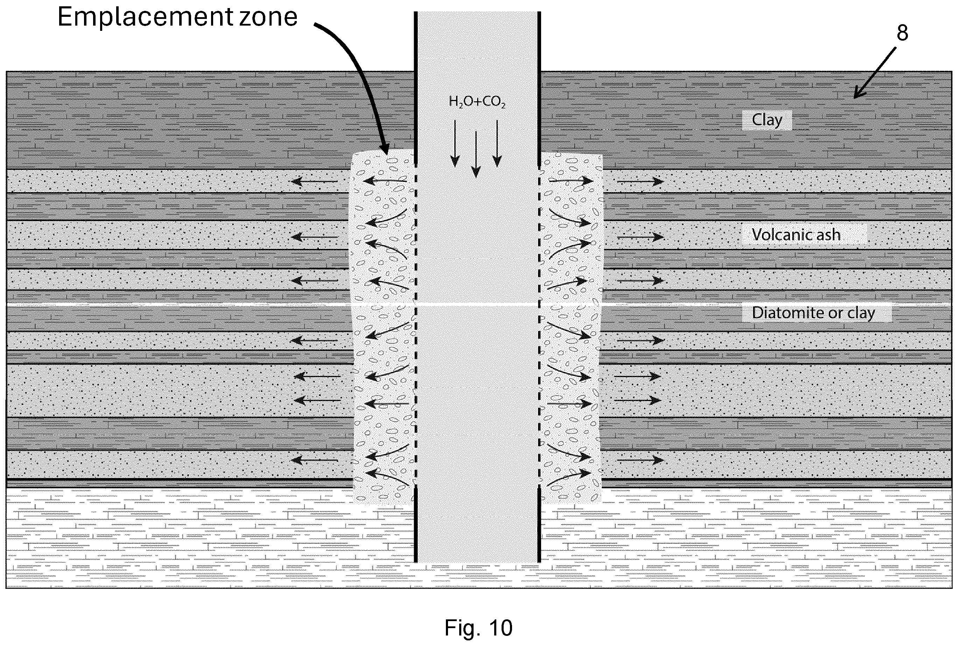

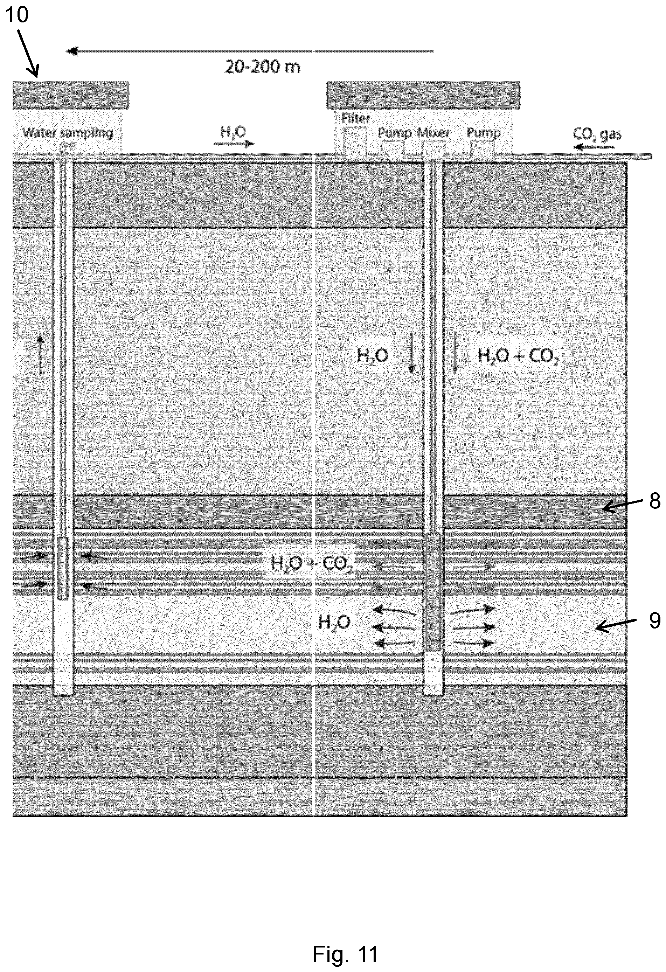

An upper boundary layer may be a layer comprising clay, such as a 5-10 m thick impermeable layer of plastic clay **8** located superjacently to the reservoir to reduce the upwards flow of CO₂, as illustrated in Figures 10-11. An example of a lower boundary layer may be a layer comprising a fluid, which is less displaceable than the CO₂ source, such as a layer into which a fluid is present or pumped, e.g. a layer comprising pressurized and/or flowing water, For example, the lower boundary layer may be a layer where the formation water is pressurized,by injection of water into the lower boundary layer, such as a horizontal subjacent layer 9, thereby generating a pressure and possibly water flowing in a horizontal direction, i.e. perpendicular to the unwanted CO₂ migration, as illustrated in Figure 11. The lower layer may thus reduce the downwards flow of CO₂. As shown in Figure 11, the injection well may advantageously be configured for double pumping, where water pumped into a lower boundary layer facilitates focused horizontal flow of the CO₂ source in the ash beds. Optionally, the injection well may be configured for alternating injections of the CO₂ gas source and a water source.

In an embodiment of the disclosure, an upper boundary and/or lower boundary of the reservoir is defined by superjacent and/or subjacent layers with lower permeability. In a further embodiment, the upper boundary of the reservoir is defined by a superjacent layer comprising fine-grained clays, such as a layer comprising 50-80 wt% clay minerals. In a further embodiment, the lower boundary of the reservoir is defined by a subjacent layer with a porosity, wherein the porosity comprises a less displaceable fluid, such as pressurized water.

The upper boundary layer **8** may be a superficial layer as indicated in Figure 10, and may further be impermeable to further focus the CO₂ within the reservoir, and to reduce the CO₂ migration and leak from the reservoir. Thus, the upper or superficial surface of the reservoir is advantageously abutting and superposed by an impermeable layer, such as a layer comprising mainly fine-grained clays, as indicated in Figure 1. Accordingly, the impermeable layer forms an upper boundary, which may also be referred to as a cap rock, which may ensure that any risk of CO₂ leakage from the reservoir is eliminated or reduced.

In an embodiment of the disclosure, an upper boundary of the reservoir is defined by a gas impermeable cap rock.

A high carbon mineralization capacity and volume efficiency of the carbon mineralization may be seen for a reservoir, comprising multiple sedimentary layers. Specifically, a high volume efficiency is seen when a first sedimentary layer is sandwiched between two second sedimentary layers that are abutting the first sedimentary layer superjacently and subjacently, thereby affecting the flow direction and rate within the different layers. For example, the flow direction and rate may be controlled and focused into the first sedimentary layer, and it is seen that despite the first sedimentary layer constituting a low fraction of the sedimentary rock, the carbonate precipitation rate and density may result in a surprisingly high carbon mineralization capacity and volume efficiency. For example, the first sedimentary layer may constitute less than half the volume of the sedimentary rock, such as 7 vol% of the sedimentary rock, and/or have an accumulated thickness of between 1-40 m, such as 3 or 4 m.

In an embodiment of the disclosure, the sedimentary rock comprises multiple sedimentary layers, such as alternating layers of a first sedimentary layer and a second sedimentary layer. In a further embodiment, the sedimentary rock comprises one or more first sedimentary layers sandwiched between two second sedimentary layers.

In an embodiment of the disclosure, the first sedimentary layers constitute between 1-100 vol% of the sedimentary rock, more preferably between 3-99 vol%, and most preferably between 5-95 vol%, such as 5, 7, 10, 25, 30, 50, or 80 vol%. In a further embodiment, first sedimentary layers have an accumulated thickness of between 1-40 m, more preferably between 2-30 m, and most preferably between 3-20 m, such as a thickness of 4, 6, 8, or 10 m.

Further control and focus of the flow direction and rate into the first sedimentary layer, and consequently improved carbonate precipitation rate and density, may be obtained the higher the permeability difference between the first and second sedimentary layers. It may for example be seen that the flow may be fully restricted to occur in the first sedimentary layer if the difference is sufficiently high, and/or if the permeability of the second sedimentary layer is between 10⁻¹⁶ to 10⁻¹⁸ darcy.

According to the invention, the first sedimentary layer has a first permeability, and the second sedimentary layer has a second permeability, and wherein the first permeability is at least a factor of 10 higher than the second permeability, such as a factor of 50 higher than the second permeability, more preferably between a factor of 100 to 10⁶ higher than the second permeability, and most preferably between a factor of 1000 to 10⁴ higher than the second permeability. In a further embodiment, the first permeability is between 10⁻¹⁰ to 10⁻¹⁶ m², more preferably between 10⁻¹¹ to 10⁻¹⁶ m², and most preferably between 10⁻¹² to 10⁻¹⁴ m². In a further embodiment, the second permeability is between 10⁻¹⁴ to 10⁻²⁰ m², more preferably between 10⁻¹⁵ to 10⁻¹⁹ m², and most preferably between 10⁻¹⁶ to 10⁻¹⁸ m².

### First sedimentary layers

The first sedimentary layers layer **1.1** comprise mainly sedimented and compacted volcanic ash particles, also referred to as tephra and/or tuff, as shown in Figure 3. Accordingly, the first sedimentary layer may comprise mainly first particles **2.1** of volcanic ash particles with average particle sizes of between 1-500 µm, preferably comprising between 80-100 vol% volcanic ash particles, and where the particles are compacted to have an open porosity of between 10-60 vol%.

In an embodiment of the disclosure, the first sedimentary layers have an open porosity of between 10-60 vol%, more preferably between 15-50 vol%, and most preferably between 20-40 vol%, such as 25, 30, or 35 vol%. In a further embodiment, the first sedimentary layers consist of the first particles, and optionally comprise between 80-100 vol% of first particles, more preferably between 90-99.5 vol%, and most preferably between 95-99 vol%.

In an embodiment of the disclosure, the first sedimentary layers comprise or consist of tephra and/or tuff. In a further embodiment, the first sedimentary layers comprise marine sedimented volcanic ash

### Second sedimentary layers

Advantageously, the second sedimentary layers **1.2** comprise mainly sedimented and compacted diatomite rock, as shown in Figure 3, such as diatomite known from the Fur formation in Denmark. Accordingly, the second sedimentary layer may have an open porosity similar to the volcanic ash layers and comprise mainly second particles **2.1** of diatomite, which is a mixture of diatoms (i.e. silicate shells from diatomite algae) and clay. Advantageously, the second particle size of the diatomite rock range from more than 3 mm to less than 1 µm, and is typically between 10 to 200 µm, and the composition comprises approximately 1/3 clay and 2/3 diatomite.

In an embodiment of the disclosure, the second sedimentary layers have an open porosity of between 10-60 vol%, more preferably between 15-50 vol%, and most preferably between 20-40 vol%, such as 25, 30, or 35 vol%. In an embodiment of the disclosure, the second sedimentary layers comprise between 30-100 wt% clay minerals, more preferably between 40-90 wt% clay minerals, and most preferably between 50-80 wt% clay minerals. In a further embodiment, the second sedimentary layers comprise or consists of diatomite rock, preferably wherein the diatomite rock comprises between 40-90 wt% diatoms, more preferably between 50-80 wt% diatoms, and most preferably between 60-70 wt% diatoms, such as 66.6 wt% diatoms.

### Carbon dioxide source

The CO₂ source, which is typically located at the surface, is connected to the superficial first opening of the injection well prior to injection. Thus, the first opening may be connected to a CO₂ tank containing either pure CO₂ gas or a mixture comprising CO₂ gas, such as CO₂ dissolved in water.

In an embodiment of the disclosure, the CO₂ source comprises gaseous CO₂, optionally mixed with and/or dissolved in water.

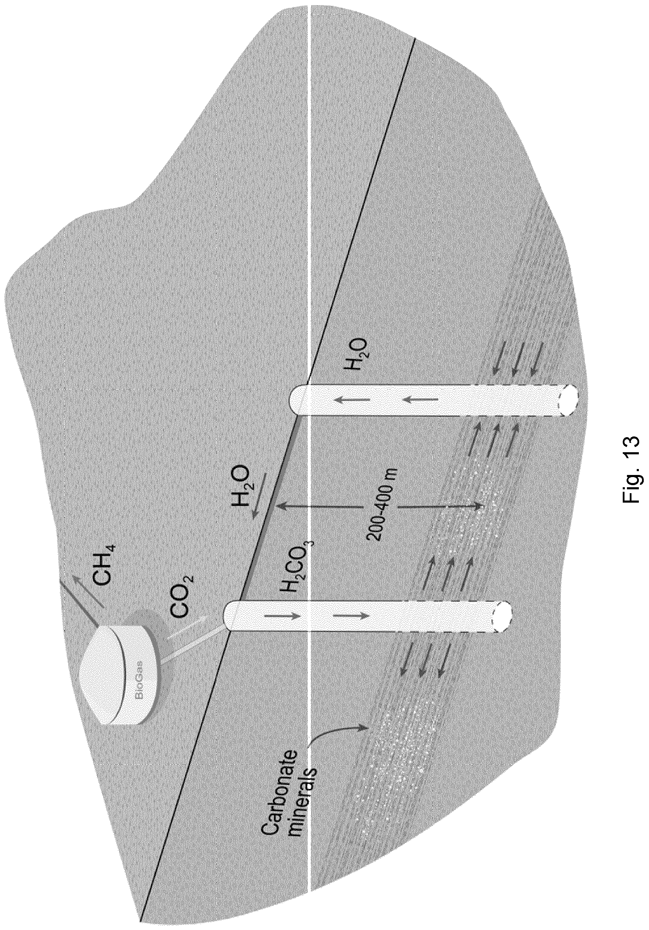

At an industrial plant, the CO₂ gas is conventionally separated from other process gases, whereby essentially pure CO₂ gas may be obtained. For example, the CO₂ source **4** be essentially pure gaseous CO₂ provided from a biogas plant as shown in Figure 1 and Figures 11-14. The biogas facilities may include a membrane CO₂ capture system such that a clean CO₂ stream with insignificant content of sulfur, oxygen, and methane is obtained. Alternatively, the CO₂ source may be gas from a DAC unit, where gaseous CO₂ at lower concentration may be obtained. Advantageously, the CO2 source is essentially pure gaseous CO₂ that may be mixed and dissolved into the native water present in the porosity of the reservoir.

In an embodiment of the disclosure, the CO₂ source comprises gaseous CO₂ at a concentration of between 80-100 vol% CO₂, more preferably between 90-99.9 vol% CO₂, and most preferably between 95-99.5 vol% CO₂. In an embodiment of the disclosure, the CO₂ source comprises gaseous CO₂ supplied from an industrial plant, such as flue gas from a biogas plant, a combustion plant, a pyrolysis plant, and/or a direct air capture (DAC) plant. In an embodiment of the disclosure, the CO₂ source comprises cleaned CO₂ where sulfur, oxygen, and/or methane impurities have been removed, such as CO₂ from a biogas facility.

Alternatively, the CO₂ source may be a CO₂ tank containing a mixture of CO₂ and water, which will have a lower CO₂ concentration due to the solubility limit of CO₂ in water. Depending on the pressure, temperature, and salinity, the saturated CO₂ concentration in water is typically between 1-10 vol%. The gaseous CO₂ may be mixed and dissolved into a water source prior to injection into the reservoir, such as a water source provided from a nearby tank or from an adjacent bore hole, such as a water bore drilling.

In a further embodiment, the CO₂ source comprises water saturated with CO₂, optionally gaseous CO₂ dissolved in water at a concentration of between 1-10 vol%, more preferably between 2-8 vol%, and most preferably between 3-7 vol%, such as 5 vol%.

It follows that the present system and method is not limited to CO₂ sources with low impurity levels, such as pure CO₂ gas or aqueous CO₂ with low amounts of sulphur. For reservoirs comprising iron rich silicate materials, sulphur impurities may be precipitated as iron sulphide simultaneously with the carbonate precipitation.

The extent and distribution of the reaction zone where carbonate minerals will precipitate also depend on the composition of the injection fluid and the chemistry of the contact interface between the injected fluid and the rock formation of the reservoir, It is found that a gaseous CO₂ source may advantageously be mixed with and/or dissolved in water before injection, and that the water advantageously comprises a low concentration of salts, such as NaCl. Hence, advantageously the water is fresh water, which may be water produced from a shallow depth, and/or cleaned water where unwanted elements have been removed by e.g. filtration.

In an embodiment of the disclosure, the CO₂ source comprises gaseous CO₂ mixed with and/or dissolved in water, wherein the water is fresh water. In an embodiment of the disclosure, the CO₂ source comprises gaseous CO₂ mixed with and/or dissolved in water, wherein the water is cleaned.

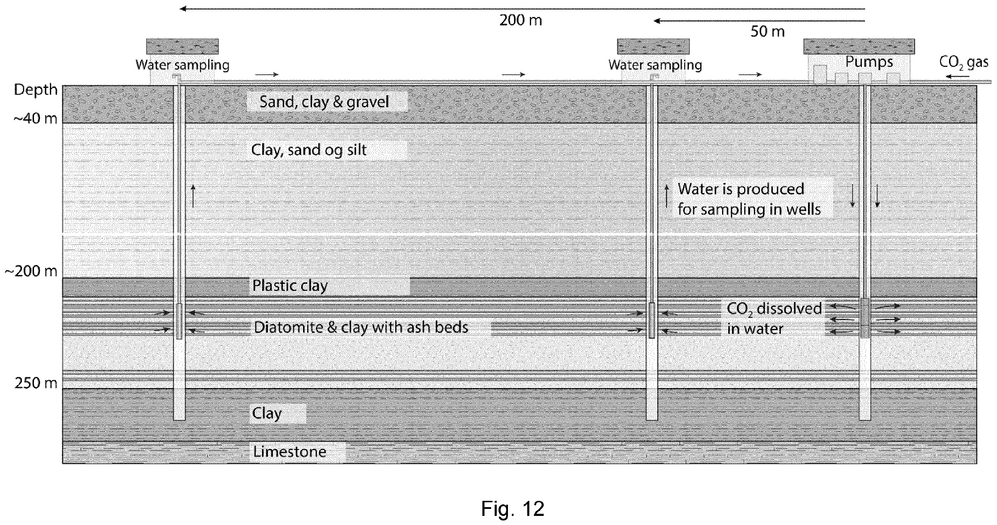

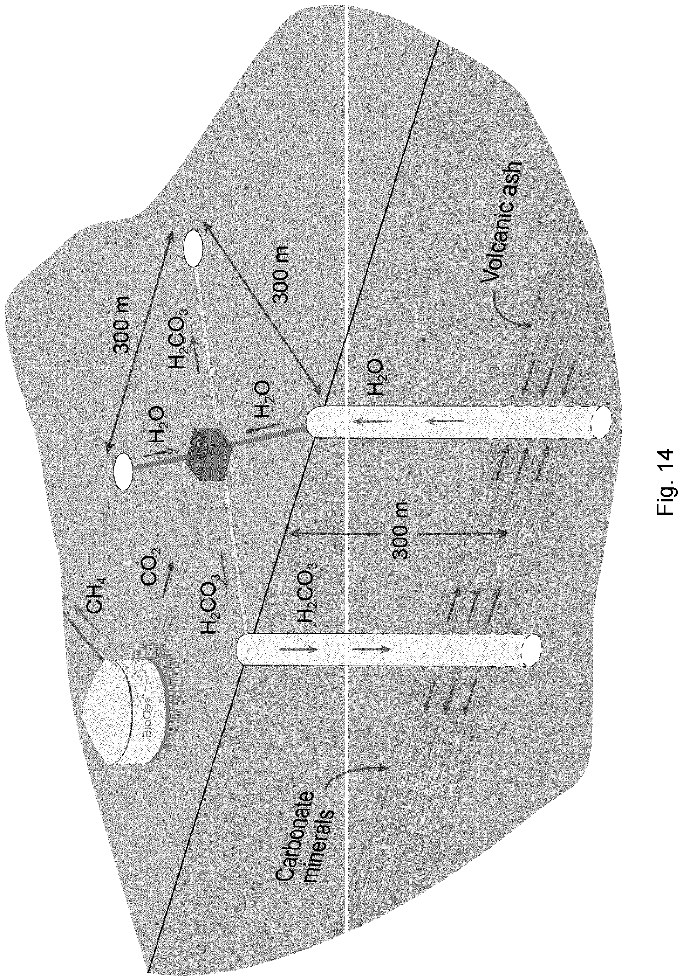

For a more efficient system, the fresh water may be obtained from one or more adjacent water production wells or water sampling wells **10,** as illustrated in Figures 11-14. The water may be extracted from any subsurface formation comprising a hydraulic pressure, such as the reservoir formation or a subjacent boundary subjected to injection, as e.g. illustrated in Figure 11. To further improve the system efficiency and carbon mineralisation, a configuration of multiple injection wells and water production wells may be applied, as sketched in Figures 12 and 14. The wells may be placed differently depending on the demand and production rates (i.e. tons CO₂ per year to be stored), as well as transferred depending on the capacity and life time of the reservoirs. Figures 11, 13-14 further indicate examples of length scales and spatial footprint of the wells.

In an embodiment of the disclosure, the system comprises one or more water production wells, optionally in fluid communication with the CO₂ source.

To further control the extent and distribution of the reaction zone, the CO₂ source may advantageously be heated to elevated temperatures before injection. Thus, the CO₂ source may be in thermal communication with a heating source, such as heated water. The heating source may for example be excess heat from a biogas facility.

In an embodiment, wherein the CO₂ source is configured to be heated, and/or in thermal communication with a heating source.

### Injection

The injection wells are advantageously shallow wells, thereby facilitating smaller and mobile systems for the carbon mineralization. Accordingly, the length of the injection wells is adapted for shallow wells. The mobile systems may be moved to different positions above the reservoir to exploit the reservoir volume, as indicated in Figure 1B. Due to the size and mobility of the system, the effect of well in the local area is limited and not permanent.

In an embodiment of the disclosure, the well is configured for an injection point located at a depth shallower or less than 800 m, such as between 300-600 m, more preferably between 200-300 m.

The subjacent opposite end of the injection well comprises one or more second openings defining the injection point **5.1** into the reservoir, as sketched in Figure 1B. The second opening may have any size and geometry, and e.g. be shaped as a nozzle or one or more apertures of the injection well. For example, the second opening may be the end opening of the injection well conduit, as sketched in Figure 1B, or comprise a multiple of apertures located radially to the injection well conduit. Generally, the more uniform the injection from the injection point into the reservoir, the more uniform the extent of the reaction zone. The apertures may be positioned on the injection well, such that the injection point is configured to inject the flow at specific layer positions.

In an embodiment of the disclosure, the injection point is configured to inject between 60-100 vol% of the flow of CO₂ into the first sedimentary layers, more preferably between 70-99 vol%, and most preferably between 80-95 vol%.

For example, a more uniform injection of the CO₂ source into the reservoir may be obtained by a casing with multiple openings along at least a part of the longitudinal casing, such as a multiple of apertures located radially on a casing. Thus, the casing may comprise a perforated filter or a well screen, and thus be configured for distributing the flow of the CO₂ across a multiple of volcanic ash layers of variable thickness in the same manner as a manifold, as sketched in Figure 10. For example the openings may be circular with a diameter of 0.2-20 mm, more preferably 0.3-10 mm, and most preferably 0.4-5 mm, such as 0.5-0.8 mm, and/or the openings may constitute between 30-70% of the surface area of the casing, such as between 40-60%, and optionally 50%, as indicated in Figure 10.

The injection well may further comprise a gravel packing surrounding a part of the well or casing, such that the gravel packing forms a high-permeability injection zone for distributing the flow of the CO₂ across a multiple of volcanic ash layers of variable thickness, as shown in Figure 10. A gravel packing is also referred to as an emplacement zone or an expanded well, where the gap between the well and the formation is filled with sand and gravel. For example the sand and gravel packing be annular and have an annular thickness of between 50-500 m, more preferably between 75-400 m, and most preferably between 150-300 m, such as 200 mm, as indicated in Figure 10.

In an embodiment of the disclosure, the injection well comprises a casing with multiple openings, and/or the injection well comprises a gravel packing along at least a part of the longitudinal well.

### Pumping system

The flow rate of the CO₂ source from the injection point **5.1** supplies the driving force for the CO₂ to mix with any native water present in the reservoir, and the further driving force for the acidified water mixture to contact the surface area of rock formation of the reservoir, as sketched in Figure 1B. The pumping system may thus be dimensioned to supply a predefined flow rate of the CO₂ source from the injection point that is sufficient for forcing CO₂ to mix with the native water, and further forcing the mixture to contact the surface area of the first particles within the reaction zone **7.**

By the term "flow rate" is meant the volume of the CO₂ source (e.g. pure CO₂ gas or aqueous CO₂ mixture) that passes per unit time. The flow rate may be obtained by a corresponding driving pressure provided by e.g. a pump, which is referred to as the flow pressure.

The pumping system is advantageously dimensioned to facilitate a more uniform carbonate precipitation rate and distribution, such that more efficient carbon mineralization is obtained. For most efficient carbon mineralization in a reservoir comprising e.g. volcanic ash, it is found that a flow pressure below the CO₂ vapor pressure at the injection point conditions (i.e. the temperature and pressure at the injection depth) may advantageously be applied. For example, the flow pressure may be between 1-500 bar, which may correspond to a flow rate of the CO₂ source of between 0.1-300 ton/day. It is further particularly found that lower flow pressures in the range of 5-30 bar or 30-60 bar may advantageously be sufficient for shallow injection wells, where the lithostatic pressure is low.

In an embodiment of the disclosure, the pumping system is configured for a flow pressure CO₂ source that is below the CO₂ vapor pressure at the injection point conditions, optionally wherein the pumping system is configured for a flow pressure of between 1-500 bar, more preferably between 5-300 bar, and most preferably between 5-100 or 10-100 bar, such as 10, 15, 20, 25, 30, 35, 40, 45, or 50 bar. In a further embodiment, the pumping system is configured to provide a flow rate of the CO₂ source of between 0.1-300 ton/day, more preferably between 0.5-200 ton/day, and most preferably between 1-150 ton/day, such as 5, 50, or 100 ton/day.

To further facilitate a more uniform carbonate precipitation rate and distribution, and thus a higher carbon mineralization capacity, the pumping system is further advantageously configured to supply a predefined flow rate of the CO₂ source that is configured such that the reaction zone is limited to a predefined distance from the injection point between 10-400 m. For example, the flow rate may be dimensioned such that the contact with the particles and the precipitation occurs at a predefined distance from the injection point of e.g. 200 m.

In an embodiment of the disclosure, the predefined flow rate of the CO₂ source is configured to force CO₂ to mix with the native water, and further to force the mixture to contact the surface area of the first particles within a predefined distance from the injection point, wherein the predefined distance from the injection point is between 10-400 m from the injection point, more preferably between 25-350 m, and most preferably between 50-300 m, such as 100, 150, 200, or 250 m.

The carbonate precipitation rate and distribution is advantageously monitored. For example, the system may comprise sensors for measuring the amount of injected CO₂ and discharged CO₂, such as isotope spike measurements, or pH measurements. Advantageously, the monitoring system comprises pH sensors and electric conductivity sensors located in the injection well, and in a water sampling well located at a distance of 20-200 m from the injection well, as sketched in Figure 11.

In an embodiment of the disclosure, the CO₂ monitoring system comprises one or more pH sensors, and/or one or more conductivity sensors.

In an embodiment of the disclosure, the system comprises a CO₂ monitoring system configured for monitoring the amount of injected CO₂ and the amount of discharged CO₂ from the reservoir.

For an injection well according to the present disclosure, the extent may correspond to a carbon mineralization capacity for each injection well of between 30,000-440,000 ton CO₂. If the size of the reservoir is larger as indicated in Figure 1B, multiple injection points may be used to exploit the reservoir volume, as indicated in Figure 1B. Thus, a reservoir comprising only ca. 3-4 m accumulated volcanic ash layers, as the Fur or Ølst formations, may surprisingly be used for stably storing up to 2 Gton CO₂ corresponding to the Danish CO₂ emission for 40-50 years.

In a further embodiment of the disclosure, the pumping system is configured to provide a carbon mineralization capacity for each injection well of between 30,000-600,000 ton CO₂, more preferably between 75,000-550,000 ton CO₂, and most preferably between 100,000-500,000 ton CO₂, such as 150,000 ton, 200,000 ton, or 440,000 ton CO₂.

### Operation

The present disclosure also relates to a method for carbon mineralization, where preferably the system of the present disclosure is used. Thus, the method may facilitate a controlled and efficient carbon mineralization reaction zone, where the carbonate precipitation rate and distribution provides a high mineralization capacity. For example, due to the improved reactivity and capacity, the carbon mineralization may be carried out at surprisingly low temperatures, despite the lower mineralization kinetics at the lower temperatures. Accordingly, the method is particularly suitable for shallow injection wells, where the temperatures are lower. Alternatively, the CO₂ source may be heated to elevated temperatures before injection to further control the carbon mineralization.

In an embodiment of the disclosure, the injection is carried out at a temperature of between 1-99 °C, more preferably between 5-50 °C, and most preferably between 10-25 °C, such as 13, 15, 18, 20, or 23 °C. In an embodiment of the disclosure, the CO₂ source is heated before injection.

To further provide a controlled and efficient carbon mineralization reaction zone, where the carbonate precipitation rate and distribution provides a high mineralization capacity, the method advantageously comprise a step of providing the CO₂ source, which may be e.g. gaseous CO₂ or CO₂ saturated water. This may further reduce the risk of gas leaks, gas migration due to gravity and buoyancy, and reduce the pressure drop associated with the method. For further control of the process, the CO₂ source may be cleaned before injection by removing sulfur, oxygen, and/or methane impurities, e.g. by using filtration or membrane separation, and the water advantageously comprise a low salt content, and may be fresh water or cleaned water.

In an embodiment of the disclosure, the CO₂ source comprises gaseous CO₂, optionally mixed with and/or dissolved in water. In a further embodiment, the CO₂ source comprises gaseous CO₂ at a concentration of between 80-100 vol% CO₂, more preferably between 90-99.9 vol% CO₂, and most preferably between 95-99.5 vol% CO₂. In an alternative embodiment, the CO₂ source comprises water saturated with CO₂, optionally gaseous CO₂ dissolved in water at a concentration of between 1-10 vol%, more preferably between 2-8 vol%, and most preferably between 375 vol%, such as 5 vol%.

In an embodiment of the disclosure, the CO₂ source is cleaned before injection by removing sulfur, oxygen, and/or methane impurities. In an embodiment of the disclosure, the water is fresh water and/or cleaned water.

The water source may advantageously be provided from one or more adjacent water production wells or water sampling wells **10,** as illustrated in Figures 11-14, where the water source may be fresh water. Further, the injection well may be configured for double pumping or alternating pumping, such as alternating injections of the CO₂ source and a water source

In an embodiment of the disclosure, the method further comprises steps of providing a water source, and mixing the water source with the CO₂ source, optionally wherein the water source is one or more water production wells. In a further embodiment of the disclosure, the injection comprises alternating injections of the CO₂ source and a water source.

To further provide a controlled and efficient carbon mineralization reaction zone, where the carbonate precipitation rate and distribution provides a high mineralization capacity, the injection into the reservoir is advantageously controlled to a certain depth and/or certain layers. Further, a more uniform injection of the CO₂ source into the reservoir may be obtained by injection via a casing with multiple openings or an annular gravel packing surrounding a part of the well or casing, as shown in Figure 10.

In an embodiment of the disclosure, the injection point is located at a depth less than 800 m, such as between 300-600 m, more preferably between 200-300 m. In a further embodiment, the injection point is configured such that between 60-100 vol% of the flow of CO₂ is injected into the first sedimentary layers, more preferably between 70-99 vol%, and most preferably between 80-95 vol%.

In an embodiment of the disclosure, the injection occurs via a casing with multiple openings, and/or a gravel packing.

To further provide a controlled and efficient carbon mineralization reaction zone, where the carbonate precipitation rate and distribution provides a high mineralization capacity, the injection into the reservoir is advantageously controlled by the injection flow pressure, and/or the flow rate of the CO₂ source, whereby the reaction zone distance from the injection point may be controlled.

In an embodiment of the disclosure, the flow rate of the CO₂ source is obtained by a flow pressure below the CO₂ vapor pressure at the injection point conditions, optionally wherein the pumping system is configured for a flow pressure of between 1-500 bar, more preferably between 5-300 bar, and most preferably between 5-100 or 10-100 bar, such as 10, 15, 20, 25, 30, 35, 40, 45, or 50 bar. In a further embodiment, the flow rate of the CO₂ source is between 0.1-300 ton/day, more preferably between 0.5-200 ton/day, and most preferably between 1-150 ton/day, such as 5, 50, or 100 ton/day. In a further embodiment, the flow rate of the CO₂ source is configured to force CO₂ to mix with the native water, and further to force the mixture to contact the surface area of the first particles within a predefined distance from the injection point, wherein the predefined distance from the injection point is between 10-400 m from the injection point, more preferably between 25-350 m, and most preferably between 50-300 m, such as 100, 150, 200, or 250 m.

To further provide a controlled and efficient carbon mineralization reaction zone, where the carbonate precipitation rate and distribution provides a high mineralization capacity, the process is advantageously continuously monitored. For example, the monitoring system may comprise pH sensors and electric conductivity sensor located in the injection well, and in a water sampling well located at a distance of 20-200 m from the injection well, as sketched in Figure 11.

In an embodiment of the disclosure, comprising a step of monitoring the amount of injected CO₂ and the amount of discharged CO₂ from the reservoir. In an embodiment of the disclosure, the monitoring is based on one or more pH sensors, and/or one or more conductivity sensors.

### Reference numbers

1 - Reservoir
1.1 - First sedimentary layer
1.2 - Second sedimentary layer
2 - Particles
2.1 - First particles
2.2 - Second particles
3 - Porosity
3.1 - Closed porosity
3.2 - Open porosity
4 - Carbon dioxide (CO₂) source
5 - Injection well
5.1 - Injection point
6 - Pumping system
7 - Reaction zone
8 - Upper boundary
9 - Lower boundary
10 - Water sampling well

### Examples

The invention is further described by the examples provided below.

### Example 1 - Carbon mineralization capacity of volcanic ash

The carbon mineralization capacity was evaluated for a reservoir comprising volcanic ash, and for comparison, a reservoir comprising igneous rock.

### Igneous rock

A model underground reservoir comprising igneous rock was prepared by placing 2000 mg of Icelandic basalt in a sealed container. The basalt is crystallized magma (i.e. effusive igneous rock), which was sampled in Iceland. The sample was left intact (not crushed) inside the container to maintain the natural texture, surface area, and to some extent, porosity/permeability.

The specific surface area of the igneous rock is typically between 2-4 m²/g for crystallized lava flows, when using Brunner-Emmett-Teller (BET) for gas adsorption. For brecciated, vesicular tops of lava flows, the specific surface area is typically between 8-43 m²/g.

### Volcanic ash

A model underground reservoir comprising first particles of volcanic ash was prepared by placing 2000 mg of Fur ash in a sealed container. The sample was left intact (not crushed) inside the container to maintain the natural texture, surface area, and to some extent, porosity/permeability. Thus, the model corresponds to the Fur ash sedimentary rock, i.e. the layers of volcanic ash present at e.g. the Fur Island in Denmark, where they are exposed above ground. The Fur ash sedimentary rock is present underground in a large portion of Denmark and northern Germany, across most of the North Sea, and in several basins at the rifted margins of NW Europe.

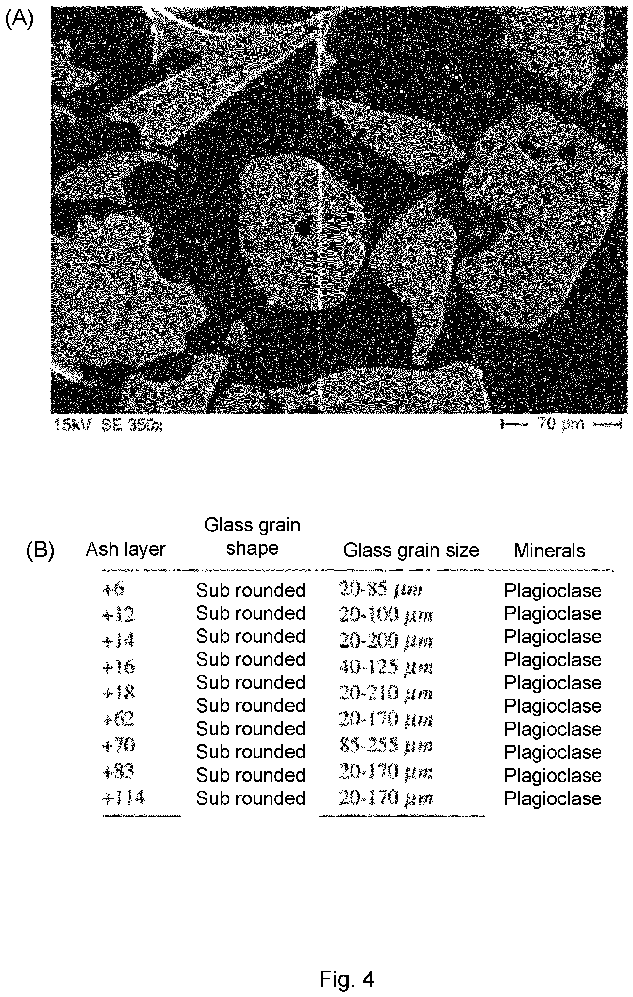

The ash essentially consists of particles of fresh or altered glass shards with an average particle dimension of between 20-80 microns across, and where the maximum particle dimensions are around 200 microns across, when measured by microscopy. Figure 4A shows a micrograph of the ash particles, where some of the particles are seen to be pure volcanic glass (seen as uniform grey particles), and some of the particles comprise up to ca. 40 vol% crystalline plagioclase (seen as slightly darker laths) within the glass. Figure 4B shows an overview of the shapes (as "subafrundet" or sub rounded), sizes and presence of crystallized minerals (as "plagioklas" or plagioclase) for ash shards particles in different Fur ash sedimentary layers (e.g. the first layer denoted +6). In an example, the specific surface area of the volcanic ash is 86 m²/g, when using Brunner-Emmett-Teller (BET) for gas adsorption, which is e.g. 20-40 times higher than for crystallized lava flows, and 2-10 times higher than that of brecciated, vesicular tops of lava flows.

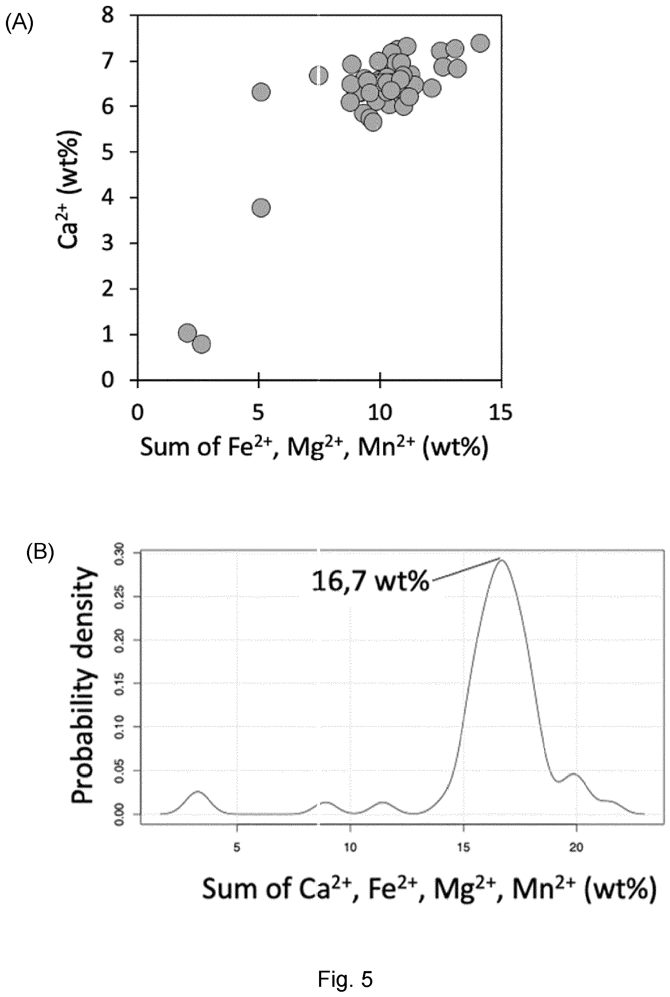

The composition of the volcanic ash was measured by XRF (X-ray fluorescence), and the results are shown in Figure 5. The elemental composition is basaltic, and Figure 5A shows the concentration of the divalent cations (Ca²+, Fe²⁺, Mg²⁺, Mn²⁺) with a concentration of ca. 7 wt% Ca. Figure 5B shows a Gaussian kernel density distribution of the sum of divalent cations, and the ash is seen to comprise ca. 17 wt% divalent cations (Ca²+, Fe²⁺, Mg²⁺, Mn²⁺).

### Dissolution experiment

Dissolution experiments were carried out to evaluate the rate of the silicate weathering reactions within the reservoir of volcanic ash, compared to the reservoir of Icelandic basalt. This was done by adding water comprising dissolved CO₂ gas (i.e. acidified water) to the sealed containers with the materials.

For both reservoirs, the water-to-rock weight ratio were about 2500.

Deionized laboratory water (Milli-Q) was chosen due to its differing saturation capacity for CO₂ compared to saline water. Moreover, deionized water was specifically selected in this case to establish baseline ion levels in the water before the reaction. Five-litre water containers were filled with water and then infused with pure CO₂ gas until saturation, resulting in a pH change from 6 to 4.5 under ambient laboratory conditions.

The model reservoirs with added water/CO₂ gas were placed in a cold room at temperature 7 °C. Sampling of water from each container was conducted at various time intervals, initially almost daily for the first 8 days, then at longer intervals until approximately the 12th day of the experiment. Sampling was performed swiftly to minimize CO₂ escape from the containers.

Analysis of divalent cations was carried out using 1 ml for each sample using an Agilent 7900 Quadrupole ICP-MS. Samples were not filtered but centrifuged immediately after a liquid sample was taken and then diluted and acidified with 2% HNO₃ before analysis.

### Results and conclusions

Generally it is seen that the exposure to the acidified water resulted in increased concentrations of easily leachable elements such as Ca, Mg, Na, K, etc. during the experiment, which indicated sufficient CO₂ availability. Some cations may precipitate as a result of the reaction with carbon dioxide, however the rapid increase in cation concentration generally indicates that the dissolution rate is faster than the precipitation rate. Si, Al, and Fe concentrations decreased or remained roughly constant, suggesting rapid precipitation as oxy-hydroxides and/or carbonates.

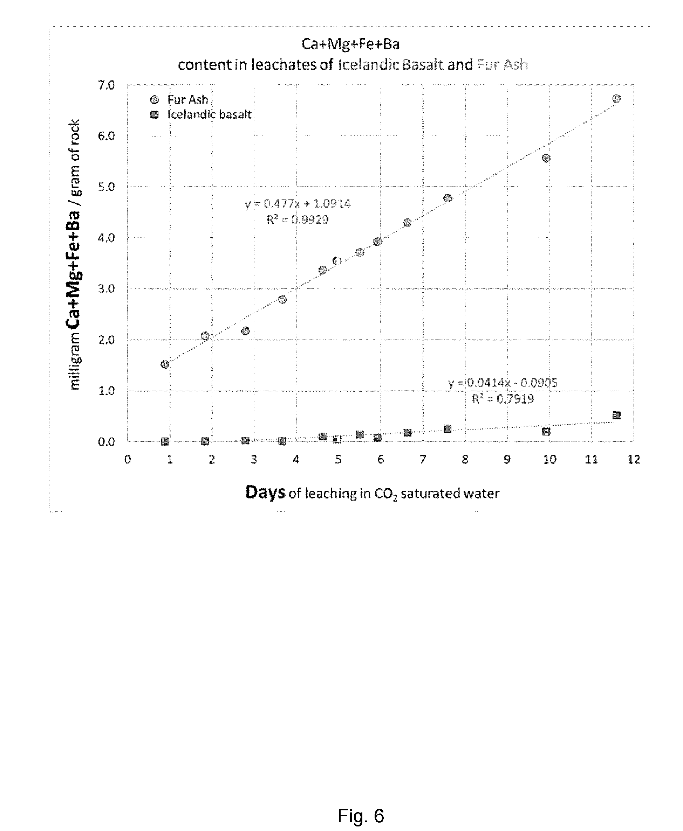

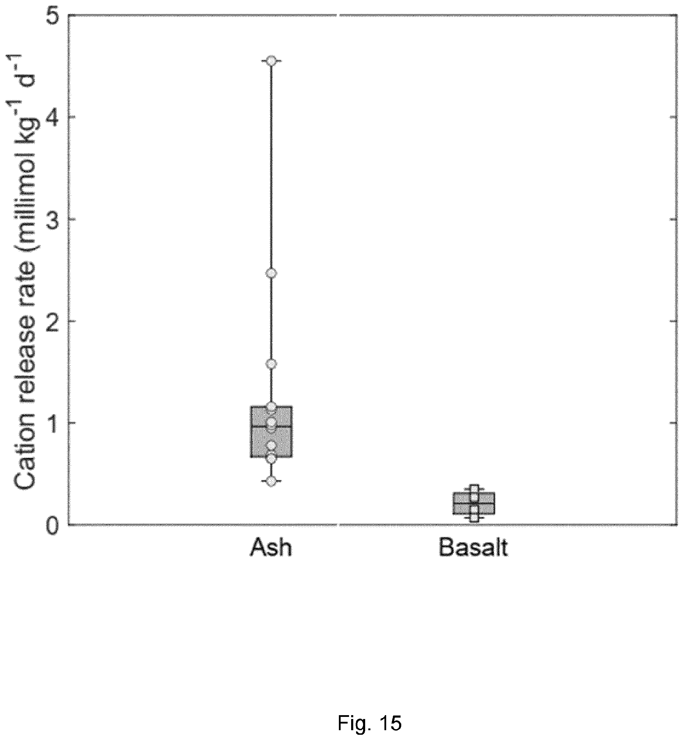

Figures 6 and 15 shows the results of multiple dissolution experiments, where the dissolution rate of the volcanic ash reservoir is shown with circle symbols, and the dissolution of the Icelandic basalt is shown with square symbols. In Figure 15 box-and-whisker diagrams show distribution of 2.5, 25, 50, 75, 97.5 percentiles. Cations represent the sum of the three major divalent cations (Ca²+, Mg²⁺, Fe²⁺) incorporated into carbonate mineralization.

The results show a linear increase in total divalent cation concentration over time, with no sign of plateau, indicating equilibrium was far from achieved during the 12-day experimental period. The rate of increase in carbonate-forming divalent cations in the volcanic ash was over an order of magnitude higher than that of the Icelandic basalt, demonstrating the significant CO₂ fixation capacity of volcanic ash even at low temperature. Thus, it is seen that the combination of high specific surface area and abundant divalent cations (Ca, Fe, Mg, Mn) makes the volcanic ash particles highly reactive with carbonated fluids and fertile for carbonate mineralisation.

Accordingly, a maximum initial cation production rate in volcanic ash (i.e. fresh or non-depleted volcanic ash) may be estimated to be between 0.2 - 0.6 g cations per kg ash per day (Figure 6) or between 0.1 - 10 millimoles cations per kg ash per day or 0.5 - 5 millimoles cations per kg ash per day (Figure 15). Accordingly, the cation release rates may facilitate a mineralization zone within a distance of 50-300 m from an injection well. However, the rate of cation production is predicted to decay exponentially with time, as the concentration of cations in the ash slowly decreases due to the dissolution and depletion of cations. Depending on the cation release rate, an exponential time constants from 130 to 400 days may be seen. It follows that the decay in cation production depends on the amount of ash that is reacted or activated simultaneously per surface m².

If a small fraction of the ash is activated simultaneously, the cation release rate is low, and the rate of mineralisation is small, but the cation production decay is also smaller. If on the other hand, most of the ash is activated simultaneously, the cation release rate is high, and the rate of mineralisation is high, but the cation production decay is also higher.

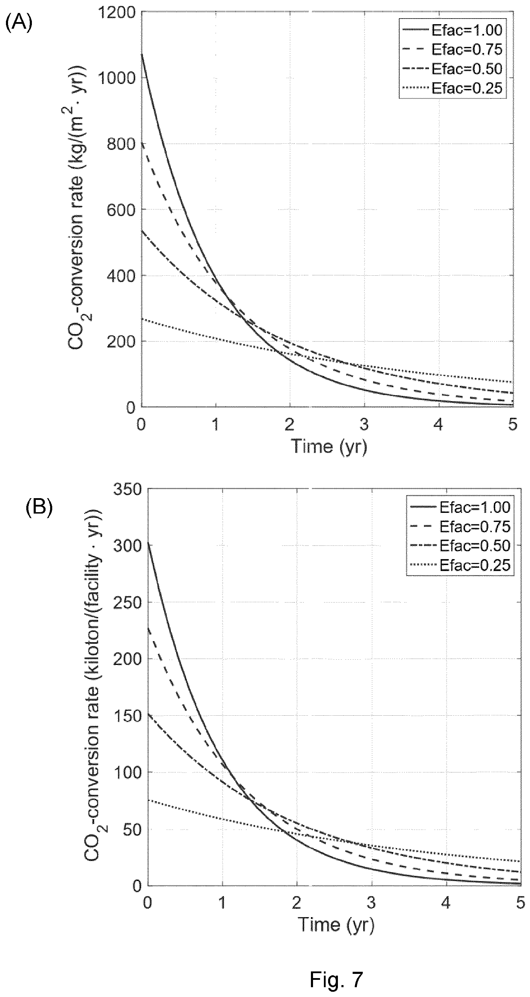

Figure 7A shows the evolution of the reaction rate with time, assuming efficiency factors (Efac) ranging from 0.2 - 1.0. The efficiency factors scale how much of the ash is activated simultaneously per surface m². A high efficiency factor means activation of a large fraction of ash and rapid cation release and mineralisation, but also quick depletion of the cation potential. A lower efficiency factor means activation of a smaller fraction of ash, slower cation release and that CO₂-mineralisation runs slower, but for longer time.

### Example 2 - Carbon mineralization capacity of underground reservoir with diatomite

One or more wells are drilled to access an underground reservoir with a drilled depth of 300 m. For example, three injections wells may be drilled into the underground Fur Formation reservoir in Denmark located in the northern part of Salling, next to Rybjerg Biogas, where the Fur formation represent a 30-60 m thick reservoir comprising alternating layers of volcanic ash and diatomite (also referred to as mo-clay, which is the local name for the highly porous, marine sediment comprising mainly diatomite). The ash layers are mainly located at a depth of 200-250 m, and has an accumulated thickness of ca. 4.4 m.

The superficial end of at least one of the wells may be connected to a CO₂ source, where the CO₂ source for example is gaseous CO₂ from the nearby biogas plant (Rybjerg Biogas) or the gaseous CO₂ may be dissolved in water e.g. ground water extracted from one of the wells, prior to the injection.

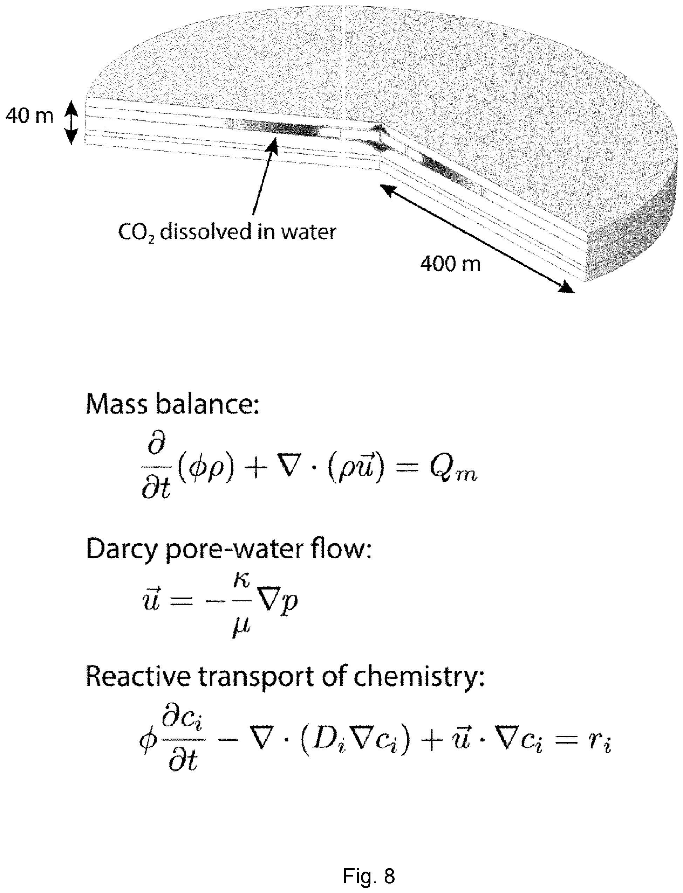

The gaseous CO₂ or the CO₂ dissolved in water spreads radially from the injection point and into the alternating layers of the Fur Formation, as sketched in Figure 8. Accordingly, the reaction zone may have a cylindrical shape with a radius determined by the permeabilities and the injection driving force.

The extent of the penetration and the CO₂-mineralisation reaction zone over time and in space, may be estimated by computer models. A computer model based on COMSOL Multiphysics (www.comsol.com), which is a diverse finite-element platform for simulating coupled Multiphysics problems, may be used. The COMSOL Multiphysics has special modules for subsurface multiphase flows in porous media, as well as chemical reactions and transport of chemical species. The equations for reactive transport with porous flow in the subsurface are shown in Figure 8. The equations are coupled in COMSOL Multiphysics and can be solved in 2D axisymmetric settings or under full 3D conditions.

Figure 8 shows a modelling example of an injected gaseous CO₂ source, where the plume is first dissolved in formation water (i.e. pore water), and as the plume spreads it reacts with the volcanic ash and slowly disappears as the CO₂ is first converted to bicarbonate and thereafter to solid carbonate minerals.

In addition, or alternatively, the extent of the CO₂-mineralisation reaction zone over time and in space may be evaluated by use of drill cores, well logs, and field-site water samples, where the amount of non-reacted and discharged CO₂ from the reservoir is evaluated. For example, the system may comprise sensors for measuring the amount of injected CO₂ and discharged CO₂, such as isotope spike measurements, or pH measurements.

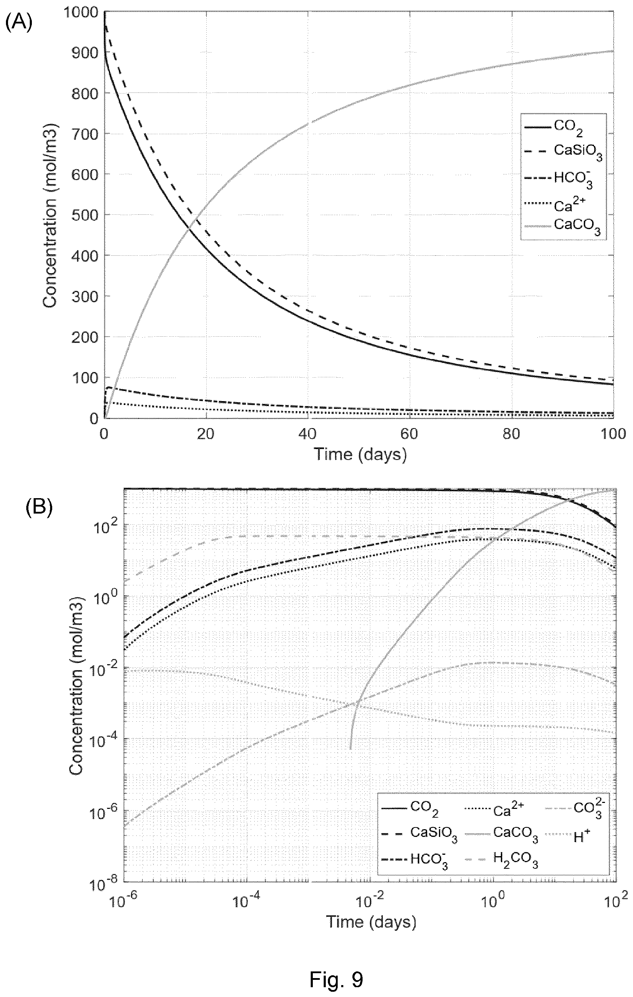

Figure 9 shows the evolution of the main geochemical elements in the model example over time. Figure 9A shows the concentrations of elements on linear scales. It is seen that the concentration of dissolved CO₂ and silicate minerals (represented here by CaSiO₃) decays over time, while carbonate minerals (represented by CaCO₃) build up. Figure 9B shows the same as Figure 9A on log-log axes, illustrating the fast underlying reactions in water dissociation and between carbonate ions.

The total accumulated thickness of ash in the Fur Formation is ca. 4.4 m. Providing all the ash in the 4.4 m thick ash column is activated, and the porosity and matrix density of ash is 0.3 and 2700 kg/m³, respectively, then a total of 1555 kg cations may be produced per surface square meter (i.e. corresponding to 4.4 m³ of ash). The cations produced daily per surface square meter may be between 1.7 - 5.0 kg cations per day, depending on the efficiency factor.

This production of cations may consume between 1.8 - 5.5 kg CO₂ per day per surface m² above the 4.4 m ash formation. The total of 1555 kg cations may result in a total CO₂ capacity of 1.5 ton CO₂ per surface square meter, corresponding to 350 kg CO₂ per m³ ash layer or 26 kg CO₂ per m³ reservoir (i.e. 60 m³ ash and diatiomite layers).

Depending on the pumping system and flow rate of the CO₂ at the injection point, the CO₂ gas dissolved in water spreads from a central well and activates ash within a radius having a predefined distance.

For example, the flow rate may be configured to provide a radius or distance of ca. 200 m from the injection point, and the surface area of the CO₂-water injection would be ca. 125,000 m² above the 4.4 m ash. The total CO₂-mineralisation capacity of the well would be ca. 200,000 tons CO₂, and the cation production may consume ca. 230 - 690 tons CO₂ per day.

Alternatively, the predefined distance may be ca. 100 m, corresponding to a total CO₂-mineralisation capacity of ca. 30,000 ton, or the distance may be 300 m and a capacity of 440,000 ton.

Fig. 7B Same rate evolution as in Fig. 7A, but now computed for a mineralisation facility where ash is activated up to distance 200 m from a central injection well. The rate is given in kiloton CO₂ per year. A typical biogas facility produces 10-30 kiloton CO₂ each year, meaning that all CO₂ from a biogas plant can likely be mineralised in one well, even at relatively low efficiency factors.

Thus, a reservoir comprising only ca. 4 m accumulated volcanic ash layers, as the Fur formation, may surprisingly be used for stably storing up to 2 Gton CO₂ corresponding to the Danish CO₂ emission for 40-50 years.

### Example 3 - Carbon mineralization in underground reservoir with clay

Similar as for Example 2 except the underground formation is 5-10 m thick reservoir comprising alternating layers of volcanic ash and clay, where the ash has an accumulated thickness of between 3 - 3.5 m, such as ca. 3 or 4 m. For example, three injections wells may be drilled into the underground in Ølst Formation, in the southern vicinity of the Fur Formation reservoir in Denmark.

Similar carbon capacity as for Example 2 may be obtained, i.e. a total CO₂ capacity of 1,000 kg CO₂ per surface square meter for a 3.0 m ash layer, corresponding to 350 kg CO₂ per m³ ash layer or 210 kg CO₂ per m³ reservoir (5 m³ ash and clay layers).

Thus, a reservoir comprising only ca. 3 m accumulated volcanic ash layers, may surprisingly be used for stably storing up to 2 Gton CO₂ corresponding to the Danish CO₂ emission for 40-50 years.

## Claims

1. A system for carbon mineralization comprising:
- an underground reservoir (1) comprising sedimentary rock, the sedimentary rock comprising multiple first particles (2.1), interparticle porosity (3.1, 3.2) and native water, wherein said first particles (2.1) have a specific surface area of between 10-200 m²/g and comprise volcanic ash particles and silicate material comprising one or more divalent cations,
wherein the sedimentary rock comprises alternating layers of a first sedimentary layer (1.1) and a second sedimentary layer (1.2), wherein the first sedimentary layer (1.1) has a first permeability, and the second sedimentary layer (1.2) has a second permeability, and wherein the first permeability is at least a factor of 10 higher than the second permeability,
- a CO2 source (4),
- one or more injection wells (5) for accessing the underground reservoir (1), the injection well (5) comprising at least one superficial first opening configured to be connected to the CO₂ source, and at least one subjacent second opening defining an injection point (5.1), and
- a pumping system (6) configured to supply a predefined flow rate of the CO₂ source (4) from the injection point (5.1) forcing CO₂ to mix with the native water, and further forcing the mixture to contact the surface area of the first particles (2.1).

2. The system according to claim 1, comprising an upper boundary (8) and/or lower boundary (9) of the reservoir (1) defined by superjacent and/or subjacent layers with lower permeability.

3. The system according to claim 2, wherein the upper boundary (8) of the reservoir (1) is defined by a superjacent layer comprising fine-grained clays, such as a layer comprising 50-80 wt% clay minerals.

4. The system according to any one of claims 2-3, wherein the upper boundary (8) of the reservoir (1) is defined by a gas impermeable cap rock.

5. The system according to any one of claims 2-4, wherein the lower boundary (9) of the reservoir is defined by a subjacent layer with a porosity (3), wherein the porosity (3) comprises a less displaceable fluid, such as pressurized water.

6. The system according to any one of the preceding claims, wherein the first permeability is at least a factor of 50 higher than the second permeability, more preferably between a factor of 100 to 10⁶ higher than the second permeability, and most preferably between a factor of 1000 to 10⁴ higher than the second permeability.

7. The system according to any one of the preceding claims, wherein the CO₂ source (4) comprises cleaned CO₂ where sulfur, oxygen, and/or methane impurities have been removed, such as CO₂ from a biogas facility.

8. The system according to any one of the preceding claims, wherein the CO₂ source (4) comprises gaseous CO₂ mixed with and/or dissolved in water, wherein the water is fresh water.

9. The system according to any one of the preceding claims, wherein the CO₂ source (4) comprises gaseous CO₂ mixed with and/or dissolved in water, wherein the water is cleaned.

10. The system according to any one of the preceding claims, comprising one or more water production wells, optionally in fluid communication with the CO₂ source (4).

11. The system according to any one of the preceding claims, wherein the CO₂ source (4) is configured to be heated, and/or in thermal communication with a heating source.

12. The system according to any one of the preceding claims, wherein the injection well (5) comprises a casing with multiple openings.

13. The system according to any one of the preceding claims, wherein the injection well (5) comprises a gravel packing along at least a part of the longitudinal well.

14. The system according to any one of the preceding claims, further comprising a CO₂ monitoring system configured for monitoring the amount of injected CO₂ and the amount of discharged CO₂ from the reservoir, optionally wherein the CO₂ monitoring system comprises one or more pH sensors, and/or one or more conductivity sensors.

15. A method for carbon mineralization comprising the steps of:
- providing an underground reservoir (1) comprising sedimentary rock, the sedimentary rock comprising multiple first particles (2.1), interparticle porosity (3.1, 3.2) and native water, wherein said first particles (2.1) have a specific surface area of between 10-200 m²/g and comprise volcanic ash particles and silicate material comprising one or more divalent cations,
wherein the sedimentary rock comprises alternating layers of a first sedimentary layer (1.1) and a second sedimentary layer (1.2), wherein the first sedimentary layer (1.1) has a first permeability, and the second sedimentary layer (1.2) has a second permeability, and wherein the first permeability is at least a factor of 10 higher than the second permeability,
- providing a CO₂ source (4),
- providing one or more injection wells (5) for accessing the underground reservoir (1), the injection well (5) comprising at least one superficial first opening connectable to the CO₂ source, and at least one subjacent second opening defining an injection point (5.1),
- injecting a predefined flow rate of the CO₂ source (4) from the injection point (5.1), forcing CO₂ to mix with the native water, and further forcing the mixture to contact the surface area of the first particles (2.1).

## Patentansprüche

1. System zur Kohlenstoffmineralisierung, umfassend:
- ein unterirdisches Reservoir (1), umfassend Sedimentgestein, wobei das Sedimentgestein mehrere erste Partikel (2.1), eine Zwischenpartikelporosität (3.1, 3.2) und natives Wasser umfasst, wobei die ersten Partikel (2.1) einen spezifischen Oberflächenbereich zwischen 10-200 m²/g aufweisen und vulkanische Aschepartikel und Silikatmaterial, umfassend ein oder mehrere zweiwertige Kationen, umfassen,
wobei das Sedimentgestein abwechselnde Schichten einer ersten Sedimentschicht (1.1) und einer zweiten Sedimentschicht (1.2) umfasst, wobei die erste Sedimentschicht (1.1) eine erste Durchlässigkeit aufweist und die zweite Sedimentschicht (1.2) eine zweite Durchlässigkeit aufweist und wobei die erste Durchlässigkeit mindestens um einen Faktor von 10 höher als die zweite Durchlässigkeit ist,
- eine CO2-Quelle (4),
- einen oder mehrere Injektionsbrunnen (5) zum Zugreifen auf das unterirdische Reservoir (1), wobei der Injektionsbrunnen (5) mindestens eine oberflächliche erste Öffnung, die dazu konfiguriert ist, mit der CO₂-Quelle verbunden zu sein, und mindestens eine darunterliegende zweite Öffnung, die einen Injektionspunkt (5.1) definiert, umfasst, und
- ein Pumpensystem (6), das dazu konfiguriert ist, eine vordefinierte Durchflussrate der CO₂-Quelle (4) von dem Injektionspunkt (5.1) zu liefern, wodurch CO₂ gezwungen wird, sich mit dem nativen Wasser zu vermischen, und ferner die Mischung gezwungen wird, mit dem Oberflächenbereich der ersten Partikel (2.1) in Kontakt zu kommen.

2. System nach Anspruch 1, umfassend eine obere Grenze (8) und/oder untere Grenze (9) des Reservoirs (1), die durch darüberliegende und/oder darunterliegende Schichten mit geringerer Durchlässigkeit definiert sind.

3. System nach Anspruch 2, wobei die obere Grenze (8) des Reservoirs (1) durch eine darüberliegende Schicht, umfassend feinkörnige Tone, definiert ist, wie eine Schicht, umfassend 50-80 Gew.-% Tonmineralien.

4. System nach einem der Ansprüche 2 bis 3, wobei die obere Grenze (8) des Reservoirs (1) durch ein gasundurchlässiges Deckgestein definiert ist.

5. System nach einem der Ansprüche 2 bis 4, wobei die untere Grenze (9) des Reservoirs durch eine darunterliegende Schicht mit einer Porosität (3) definiert ist, wobei die Porosität (3) ein weniger verdrängbares Fluid, wie unter Druck stehendes Wasser, umfasst.

6. System nach einem der vorhergehenden Ansprüche, wobei die erste Durchlässigkeit mindestens um einen Faktor von 50 höher als die zweite Durchlässigkeit, mehr bevorzugt um einen Faktor von zwischen 100 bis 10⁶ höher als die zweite Durchlässigkeit und am meisten bevorzugt um einen Faktor von zwischen 1000 bis 10⁴ höher als die zweite Durchlässigkeit ist.

7. System nach einem der vorhergehenden Ansprüche, wobei die CO₂-Quelle (4) gereinigtes CO₂ umfasst, aus dem Schwefel-, Sauerstoff- und/oder Methanverunreinigungen entfernt wurden, wie CO₂ aus einer Biogasanlage.

8. System nach einem der vorhergehenden Ansprüche, wobei die CO₂-Quelle (4) gasförmiges CO₂ umfasst, das mit Wasser vermischt und/oder darin gelöst ist, wobei das Wasser Süßwasser ist.

9. System nach einem der vorhergehenden Ansprüche, wobei die CO₂-Quelle (4) gasförmiges CO₂ umfasst, das mit Wasser vermischt und/oder darin gelöst ist, wobei das Wasser gereinigt ist.

10. System nach einem der vorhergehenden Ansprüche, umfassend einen oder mehrere Wassergewinnungsbrunnen, die optional in Fluidkommunikation mit der CO₂-Quelle (4) sind.

11. System nach einem der vorhergehenden Ansprüche, wobei die CO₂-Quelle (4) dazu konfiguriert ist, beheizt zu werden, und/oder in thermischer Kommunikation mit einer Heizquelle ist.

12. System nach einem der vorhergehenden Ansprüche, wobei der Injektionsbrunnen (5) ein Gehäuse mit mehreren Öffnungen umfasst.

13. System nach einem der vorhergehenden Ansprüche, wobei der Injektionsbrunnen (5) eine Kiespackung entlang mindestens eines Teils des länglichen Brunnens umfasst.

14. System nach einem der vorhergehenden Ansprüche, ferner umfassend ein CO₂-Überwachungssystem, das zum Überwachen der Menge des injizierten CO₂ und der Menge des aus dem Reservoir abgeleiteten CO₂ konfiguriert ist, wobei das CO₂-Überwachungssystem optional einen oder mehrere pH-Sensoren und/oder einen oder mehrere Leitfähigkeitssensoren umfasst.

15. Verfahren zur Kohlenstoffmineralisierung, umfassend die folgenden Schritte:
- Bereitstellen eines unterirdischen Reservoirs (1), umfassend Sedimentgestein, wobei das Sedimentgestein mehrere erste Partikel (2.1), eine Zwischenpartikelporosität (3.1, 3.2) und natives Wasser umfasst, wobei die ersten Partikel (2.1) einen spezifischen Oberflächenbereich zwischen 10-200 m²/g aufweisen und vulkanische Aschepartikel und Silikatmaterial, umfassend ein oder mehrere zweiwertige Kationen, umfassen, wobei das Sedimentgestein abwechselnde Schichten einer ersten Sedimentschicht (1.1) und einer zweiten Sedimentschicht (1.2) umfasst, wobei die erste Sedimentschicht (1.1) eine erste Durchlässigkeit aufweist und die zweite Sedimentschicht (1.2) eine zweite Durchlässigkeit aufweist und wobei die erste Durchlässigkeit mindestens um einen Faktor von 10 höher als die zweite Durchlässigkeit ist,
- Bereitstellen einer CO₂-Quelle (4),
- Bereitstellen eines oder mehrerer Injektionsbrunnen (5) zum Zugreifen auf das unterirdische Reservoir (1), wobei der Injektionsbrunnen (5) mindestens eine oberflächliche erste Öffnung, die mit der CO₂-Quelle verbindbar ist, und mindestens eine darunterliegende zweite Öffnung, die einen Injektionspunkt (5.1) definiert, umfasst,
- Injizieren einer vordefinierten Durchflussrate der CO₂-Quelle (4) von dem Injektionspunkt (5.1), wodurch CO₂ gezwungen wird, sich mit dem nativen Wasser zu vermischen, und ferner die Mischung gezwungen wird, mit dem Oberflächenbereich der ersten Partikel (2.1) in Kontakt zu kommen.

## Revendications

1. Système de minéralisation de carbone comprenant :
- un réservoir souterrain (1) comprenant une roche sédimentaire, la roche sédimentaire comprenant de multiples premières particules (2.1), une porosité interparticulaire (3.1, 3.2) et de l'eau native, dans lequel lesdites premières particules (2.1) ont une surface spécifique comprise entre 10 et 200 m²/g et comprennent des particules de cendres volcaniques et un matériau silicaté comprenant un ou plusieurs cations divalents,
dans lequel la roche sédimentaire comprend des couches alternées d'une première couche sédimentaire (1.1) et d'une seconde couche sédimentaire (1.2), dans lequel la première couche sédimentaire (1.1) a une première perméabilité et la seconde couche sédimentaire (1.2) a une seconde perméabilité, et dans lequel la première perméabilité est supérieure d'au moins un facteur 10 à la seconde perméabilité,
- une source de CO2 (4),
- un ou plusieurs puits d'injection (5) pour accéder au réservoir souterrain (1), le puits d'injection (5) comprenant au moins une première ouverture superficielle configurée pour être connectée à la source de CO₂, et au moins une seconde ouverture sous-jacente définissant un point d'injection (5.1), et
- un système de pompage (6) configuré pour fournir un débit prédéfini de la source de CO₂ (4) à partir du point d'injection (5.1) forçant le CO₂ à se mélanger à l'eau native, et forçant en outre le mélange à entrer en contact avec la surface des premières particules (2.1).

2. Système selon la revendication 1, comprenant une limite supérieure (8) et/ou une limite inférieure (9) du réservoir (1) définies par des couches sus-jacentes et/ou sous-jacentes de perméabilité inférieure.

3. Système selon la revendication 2, dans lequel la limite supérieure (8) du réservoir (1) est définie par une couche sus-jacente comprenant des argiles à grains fins, telle qu'une couche comprenant 50 à 80 % en poids de minéraux argileux.

4. Système selon l'une quelconque des revendications 2 à 3, dans lequel la limite supérieure (8) du réservoir (1) est définie par une roche de couverture imperméable au gaz.

5. Système selon l'une quelconque des revendications 2 à 4, dans lequel la limite inférieure (9) du réservoir est définie par une couche sous-jacente avec une porosité (3), dans lequel la porosité (3) comprend un fluide moins déplaçable, tel que de l'eau sous pression.

6. Système selon l'une quelconque des revendications précédentes, dans lequel la première perméabilité est supérieure d'au moins un facteur 50 à la seconde perméabilité, de manière davantage préférée supérieure d'un facteur compris entre 100 et 10⁶ à la seconde perméabilité, et de manière préférée entre toutes supérieure d'un facteur compris entre 1 000 et 10⁴ à la seconde perméabilité.

7. Système selon l'une quelconque des revendications précédentes, dans lequel la source de CO₂ (4) comprend du CO₂ nettoyé où les impuretés de soufre, d'oxygène et/ou de méthane ont été éliminées, comme le CO₂ provenant d'une installation de biogaz.

8. Système selon l'une quelconque des revendications précédentes, dans lequel la source de CO₂ (4) comprend du CO₂ gazeux mélangé à et/ou dissous dans de l'eau, dans lequel l'eau est de l'eau douce.

9. Système selon l'une quelconque des revendications précédentes, dans lequel la source de CO₂ (4) comprend du CO₂ gazeux mélangé à et/ou dissous dans de l'eau, dans lequel l'eau est purifiée.

10. Système selon l'une quelconque des revendications précédentes, comprenant un ou plusieurs puits de production d'eau, éventuellement en communication fluidique avec la source de CO₂ (4).

11. Système selon l'une quelconque des revendications précédentes, dans lequel la source de CO₂ (4) est configurée pour être chauffée et/ou en communication thermique avec une source de chauffage.

12. Système selon l'une quelconque des revendications précédentes, dans lequel le puits d'injection (5) comprend un tubage avec de multiples ouvertures.

13. Système selon l'une quelconque des revendications précédentes, dans lequel le puits d'injection (5) comprend un garnissage de gravier le long d'au moins une partie du puits longitudinal.

14. Système selon l'une quelconque des revendications précédentes, comprenant en outre un système de surveillance de CO₂ configuré pour surveiller la quantité de CO₂ injectée et la quantité de CO₂ rejetée par le réservoir, éventuellement dans lequel le système de surveillance de CO₂ comprend un ou plusieurs capteurs de pH et/ou un ou plusieurs capteurs de conductivité.

15. Procédé de minéralisation de carbone comprenant les étapes suivantes :
- la fourniture d'un réservoir souterrain (1) comprenant une roche sédimentaire, la roche sédimentaire comprenant de multiples premières particules (2.1), une porosité interparticulaire (3.1, 3.2) et de l'eau native, dans lequel lesdites premières particules (2.1) ont une surface spécifique comprise entre 10 et 200 m²/g et comprennent des particules de cendres volcaniques et un matériau silicaté comprenant un ou plusieurs cations divalents, dans lequel la roche sédimentaire comprend des couches alternées d'une première couche sédimentaire (1.1) et d'une seconde couche sédimentaire (1.2), dans lequel la première couche sédimentaire (1.1) a une première perméabilité et la seconde couche sédimentaire (1.2) a une seconde perméabilité, et dans lequel la première perméabilité est supérieure d'au moins un facteur 10 à la seconde perméabilité,
- la fourniture d'une source de CO₂ (4),
- la fourniture d'un ou de plusieurs puits d'injection (5) pour accéder au réservoir souterrain (1), le puits d'injection (5) comprenant au moins une première ouverture superficielle pouvant être connectée à la source de CO₂, et au moins une seconde ouverture sous-jacente définissant un point d'injection (5.1),
- l'injection d'un débit prédéfini de la source de CO₂ (4) à partir du point d'injection (5.1) forçant le CO₂ à se mélanger à l'eau native, et forçant en outre le mélange à entrer en contact avec la surface des premières particules (2.1).
